# EUROPÄISCHE PATENTSCHRIFT

(11) **EP 3 234 388 B1**
(45) Veröffentlichungstag und Bekanntmachung des Hinweises auf die Patenterteilung: **26.02.2020**
(21) Anmeldenummer: 15819810.1
(22) Anmeldetag: 17.12.2015
(51) Int. Cl.: F16D 3/62, F16D 3/68

(54) **KUPPLUNGSVORRICHTUNG UND FADENVERSTÄRKTE GELENKVORRICHTUNG**
COUPLING DEVICE AND FIBRE-REINFORCED ARTICULATION DEVICE
DISPOSITIF D'ACCOUPLEMENT ET DISPOSITIF D'ARTICULATION RENFORCÉ DE FILS

(30) Priorität: 17.12.2014 DE 102014018842
(43) Veröffentlichungstag der Anmeldung: 25.10.2017
(73) Patentinhaber: Süddeutsche Gelenkscheibenfabrik GmbH & Co. KG, 84478 Waldkraiburg (DE); Siemens Mobility GmbH, 81739 München (DE)
(72) Erfinder: HUBER, Armin, 84573 Schoenberg (DE); ORTHOFER, Wolfgang, 84453 Muehldorf a. Inn (DE); EBERLER, Josef, 92318 Neumarkt (DE); JOOS, Klaus, 90459 Nuernberg (DE); EBENHOFER, Martin, 84367 Reut (DE); BRANDL, Marc, 84508 Burgkirchen (DE)
(74) Vertreter: Thum, Bernhard
(86) Internationale Anmeldenummer: PCT/EP2015/080320
(87) Internationale Veröffentlichungsnummer: WO 2016/097195

(56) Entgegenhaltungen:
- EP-A1- 0 035 283
- EP-A2- 2 626 579

## Beschreibung

Die vorliegende Erfindung betrifft eine Kupplungsvorrichtung zum Verbinden eines Motors mit einem Getriebe eines Fahrzeugs. Ferner betrifft die vorliegende Erfindung eine fadenverstärkte Gelenkvorrichtung für eine derartige Kupplungsvorrichtung.

Derartige Kupplungsvorrichtungen werden antriebsseitig in einem Fahrzeug, insbesondere in einem Schienenfahrzeug angeordnet. Unter einer antriebsseitigen Anordnung der Kupplungsvorrichtung ist in diesem Zusammenhang zu verstehen, dass die Kupplungsvorrichtung zwischen einer Motorausgangswelle und einer Getriebeeingangswelle angeordnet ist, also den Motor mit dem Getriebe verbindet.

Im Bereich der Schienenfahrzeuge wird zur Verbindung eines Motors mit einem Getriebe zumeist auf Bogenzahnkupplungen zurückgegriffen. Derartige Bogenzahnkupplungen sind aus dem Stand der Technik bekannt und beispielsweise in dem Dokument DE 29 080 627 U1 beschrieben. Bogenzahnkupplungen sind aufgrund ihres Aufbaus und der notwendigen Öl- bzw. Fettschmierung sehr wartungsintensiv. Die Montage und Demontage einer Bogenzahnkupplung ist mit einem sehr hohen Zeitaufwand verbunden. Aufgrund ihrer Verzahnungen entwickeln Bogenzahnkupplungen auch in erheblichem Maße Geräusche. Auch die Montage von Bogenzahnkupplungen ist aufgrund ihres Aufbaus sehr aufwendig und damit kostenintensiv. Dies liegt darin begründet, dass bei der Montage einer Bogenzahnkupplung in einem Antriebsstrang eines Schienenfahrzeugs immer das Getriebe des Schienenfahrzeugantriebs extra ausgeschwenkt werden muss, um die Bogenzahnkupplung montieren zu können. Wurde das Getriebe ausgeschwenkt, müssen zunächst die beiden Hälften der Bogenzahnkupplung jeweils mit dem Motor oder dem Getriebe verbunden werden. Im Anschluss daran wird das Getriebe mit seiner Kupplungshälfte eingeschwenkt. Erst in diesem Zustand können die beiden Hälften der Bogenzahnkupplung miteinander verbunden werden.

Eine weitere aus dem Stand der Technik bekannte Kupplungsvorrichtung ist in dem Dokument DE 196 39 304 A1 offenbart. Dieses Dokument beschreibt eine elastische Gelenkkupplung mit einem zwischen zwei Kupplungsflanschen angeordneten Zwischenring. Der Zwischenring weist einzelne am Umfang verteilte, in Gummiblöcke einvulkanisierte Metallelemente auf, die wechselseitig mit den Kupplungsflanschen verschraubt sind. Die Metallelemente des Zwischenrings bestehen aus in Umfangsrichtung gleichmäßig verteilten Keilen. Die Keile erstrecken sich in radialer Richtung über die gesamte Ringbreite. Zwischen den Keilen einvulkanisierte Gummiblöcke stehen im eingebauten Zustand in Umfangsrichtung unter Druckvorspannung. Ferner sind aus dem Stand der Technik Doppeltorsionskupplungen der in DE 10 2012 002 660 A1 und EP 0 035 283 B1 offenbarten Art bekannt.

Diese Doppeltorsionskupplung weist eine erste Torsionskupplung und eine zweite Torsionskupplung auf. Die erste Torsionskupplung umfasst einen ersten Verbindungsflansch zur Verbindung mit einer drehmomenterzeugenden Kraftwelle und eine Vielzahl von Laschen, die jeweils in einem Endbereich mit dem ersten Verbindungsflansch verbunden sind. Die zweite Torsionskupplung umfasst einen Verbindungsflansch, der zur Verbindung mit einer angetriebenen Welle dient. Beide Torsionskupplungen sind über ein Zwischenstück miteinander verbunden, mit dem die jeweils anderen Endbereiche der Laschen verbunden sind. Die Laschen werden mit dem Zwischenstück ausgehend von dem ersten Verbindungsflansch oder dem zweiten Verbindungsflansch verbunden bzw. verschraubt, so dass die Laschen beidseitig zugänglich sein müssen, um sie mit dem ersten Flansch oder dem zweiten Flansch sowie dem Zwischenstück verbinden zu können.

Es ist eine Aufgabe der vorliegenden Erfindung, eine Kupplungsvorrichtung bereitzustellen, die in einem begrenzten Einbauraum schnell und einfach zu montieren ist. Es ist eine weitere Aufgabe der vorliegenden Erfindung, eine Kupplungsvorrichtung bereitzustellen, die insbesondere für den antriebsseitigen Einsatz in einem Schienenfahrzeug geeignet ist.

Diese Aufgaben werden mit einer Kupplungsvorrichtung mit den Merkmalen des Patentanspruchs 1 gelöst.

Weitere Ausführungsformen der Erfindung sind in den abhängigen Ansprüchen angegeben.

Die erfindungsgemäße Kupplungsvorrichtung zum Verbinden eines Motors mit einem Getriebe eines Fahrzeugs, insbesondere eines Schienenfahrzeugs, umfasst wenigstens einen ersten Flansch, wenigstens einen zweiten Flansch, wenigstens eine erste fadenverstärkte Gelenkvorrichtung und wenigstens eine zweite fadenverstärkte Gelenkvorrichtung. Zwischen der ersten und der zweiten fadenverstärkten Gelenkvorrichtung ist wenigstens eine Verbindungsanordnung angeordnet. Die wenigstens eine erste fadenverstärkte Gelenkvorrichtung und die wenigstens eine zweite fadenverstärkte Gelenkvorrichtung definieren in Richtung der Mittelachse der Kupplungsvorrichtung zwischen sich einen Verbindungsbereich. Ausgehend von diesem Verbindungsbereich sind die erste fadenverstärkte Gelenkvorrichtung mit der wenigstens einen Verbindungsanordnung und dem ersten Flansch sowie die zweite fadenverstärkte Gelenkvorrichtung mit der wenigstens einen Verbindungsanordnung und dem zweiten Flansch verbindbar.

Die erfindungsgemäße Kupplungsvorrichtung erlaubt somit, dass sämtliche Komponenten ausgehend von dem Verbindungsbereich miteinander verbunden bzw. aneinander befestigt werden können. Die Kupplungsvorrichtung gemäß der Erfindung ermöglicht eine Montage oder Demontage selbst dann, wenn die Flansche zur Verbindung mit den fadenverstärkten Gelenkvorrichtungen nicht oder nur schwer zugänglich sind. Für eine Montage oder Demontage der Kupplungsvorrichtung gemäß der Erfindung müssen dementsprechend nur die erste fadenverstärkte Gelenkvorrichtung und die zweite fadenverstärkte Gelenkvorrichtung von einer axialen Seite aus, d.h. aus dem Verbindungsbereich heraus, zugänglich sein.

Die erfindungsgemäße Kupplungsvorrichtung ermöglicht ferner, dass sämtliche ihrer Komponenten über den Verbindungsbereich in radialer Richtung eingesetzt bzw. montiert und auch in radialer Richtung entnommen werden können. Anders ausgedrückt können die erste fadenverstärkte Gelenkvorrichtung, die zweite fadenverstärkte Gelenkvorrichtung und auch die wenigstens eine Verbindungsanordnung in radialer Richtung über den Verbindungsbereich eingesetzt und entnommen werden. Die wenigstens eine Verbindungsanordnung kann selbst dann in radialer Richtung entnommen werden, wenn die erste fadenverstärkte Gelenkvorrichtung und die zweite fadenverstärkte Gelenkvorrichtung zur Montage oder Demontage nur von einer ihrer axialen Flächen aus zugänglich sind. Ausgehend von dem Verbindungsbereich können die erste fadenverstärkte Gelenkvorrichtung mit dem ersten Flansch und die zweite fadenverstärkte Gelenkvorrichtung mit dem zweiten Flansch verbunden werden. Im Anschluss daran können die Gelenkvorrichtungen mit dem in radialer Richtung eingesetzten, wenigstens einen Verbindungsanordnung verbunden werden.

Da sowohl die erste und die zweite fadenverstärkte Gelenkvorrichtung als auch die wenigstens eine Verbindungsanordnung radial, d. h. quer zur Längsachse, eingesetzt bzw. entnommen und die fadenverstärkten Gelenkvorrichtungen ausgehend von dem Verbindungsbereich mit dem jeweils ihnen zugeordneten Flansch und der Verbindungsanordnung verbunden werden können, wird für die Montage bzw. Demontage der erfindungsgemäßen Kupplungsvorrichtung sehr wenig Raum benötigt. Da die Komponenten der erfindungsgemäßen Kupplungsvorrichtung in radialer Richtung eingesetzt und ausgehend von dem Verbindungsbereich, d.h. von nur einer axialen Seite aus, positioniert und befestigt werden können, wird bereits zum Einsetzen der fadenverstärkten Gelenkvorrichtungen und der wenigstens einen Verbindungsanordnung sehr wenig Raum in axialer Richtung benötigt. Gerade im Fall von Schienenfahrzeugen ist der Bereich zwischen Getriebe und Motor nur beschränkt zugänglich, so dass die radiale Zuführbarkeit der fadenverstärkten Gelenkvorrichtungen und der wenigstens einen Verbindungsanordnung und die eine Verbindung der einzelnen Komponenten der erfindungsgemäßen Kupplungsvorrichtung ausgehend von dem sich in axialer Richtung erstreckenden Verbindungsbereich einen erheblichen Vorteil gegenüber dem Stand der Technik darstellen.

Die Kupplungsvorrichtung gemäß der Erfindung ist insbesondere für den antriebseitigen Einsatz in einem Schienenfahrzeug geeignet, d.h. die Kupplungsvorrichtung kann zum Verbinden eines Motors mit einem Getriebe eines Schienenfahrzeugs eingesetzt werden. Der wenigstens eine erste Flansch und der wenigstens eine zweite Flansch können entsprechend insbesondere zur Verbindung mit einer Motorausgangswelle und einer Getriebeeingangswelle eines Schienenfahrzeugs ausgebildet sein. Derartige Kupplungsvorrichtungen werden insbesondere in teilabgefederten Antriebssträngen von Schienenfahrzeugen eingesetzt. Der Motor kann an einem Drehgestell des Schienenfahrzeugs angebracht sein, wohingegen das Getriebe am Radsatzangebracht ist, beispielsweise als achsreitendes Getriebe. Die Kupplungsvorrichtung gemäß der Erfindung verbindet die Motorwelle und die Getriebewelle und gleicht Relativbewegungen des Elektromotors gegenüber dem
Getriebe aus.

Die fadenverstärkten Gelenkvorrichtungen dienen auch zur Reduzierung der ungefederten Massen am Rad bzw. am Radsatz des Fahrzeugs. Dazu wird der Motor an einem Fahrzeugrahmen oder bei Schienenfahrzeugen an einem Drehgestell elastisch angeordnet bzw. gelagert. Durch die elastische Lagerung des Motors kann es zu Relativbewegungen zwischen dem Motor und dem Rad/dem Radsatz bzw. zu Relativbewegungen zwischen dem Motor und dem Getriebe kommen. Diese Relativbewegungen zwischen dem elastisch gelagerten Motor und dem Rad bzw. dem Radsatz müssen ausgeglichen werden. Zum Ausgleich dieser Relativbewegung wird die wenigstens eine fadenverstärkte Gelenkvorrichtung verwendet.

Mit der Kupplungsvorrichtung gemäß der Erfindung können sämtliche der eingangs beschriebenen Nachteile einer Bogenzahnkupplung ausgeräumt werden, d.h. die Kupplungsvorrichtung gemäß der Erfindung ist weniger wartungsintensiv, einfacher zu montieren und geräuschärmer als die bekannten Bogenzahnkupplungen. Ferner ist bei der erfindungsgemäßen Kupplungsvorrichtung auch keine Öl- oder Fettschmierung notwendig. Ein weiterer Vorteil der erfindungsgemäßen Kupplungsvorrichtung gegenüber Bogenzahnkupplungen ist, dass die erfindungsgemäße Kupplungsvorrichtung aufgrund der fadenverstärkten Gelenkvorrichtungen torsional nachgiebiger ist. Die aus dem Stand der Technik bekannten Bogenzahnkupplungen sind dagegen sehr drehsteif. Im Falle eines Motorkurzschlusses baut sich aufgrund der Massenträgheit eines Fahrzeugrades bzw. eines Radsatzes eines Fahrzeugs ein sehr hohes Moment auf, welches das Getriebe beschädigen kann. Bei der erfindungsgemäßen Kupplungsvorrichtung mit den fadenverstärkten Gelenkvorrichtungen kann sich der Antriebsstrang aufgrund der torsionalen Nachgiebigkeit der Kupplungsvorrichtung bzw. der fadenverstärkten Gelenkvorrichtungen tordieren. Deshalb baut sich auch bei einem Motorkurzschluss nur ein geringeres Moment auf, das das Getriebe nicht beschädigen kann.

Verglichen mit den aus dem Stand der Technik bekannten Bogenzahnkupplungen muss bei der Montage der Kupplungsvorrichtung gemäß der Erfindung nicht extra das Getriebe ausgeschwenkt werden, sondern die Kupplungsvorrichtung gemäß der Erfindung kann direkt zwischen dem Motor und dem eingeschwenkten Getriebe montiert werden. Wie eingangs bereits erwähnt, erlaubt die Kupplungsvorrichtung gemäß der Erfindung das radiale Einsetzen, d. h. quer zur Längsachse, aller ihrer Komponenten, die dann ausgehend von dem Verbindungsbereich verbunden und befestigt werden können. Selbst die wenigstens eine Verbindungsanordnung kann radial eingesetzt und anschließend mit den fadenverstärkten Gelenkvorrichtungen verbunden werden. Somit reicht auch der begrenzte Raum zwischen dem Motor und dem eingeschwenkten Getriebe für die Montage der Kupplungsvorrichtung gemäß der Erfindung aus. Dadurch kann der Montagevorgang der Kupplungsvorrichtung gemäß der Erfindung verglichen mit dem von Bogenzahnkupplungen erheblich reduziert werden.

Die erfindungsgemäße Kupplungsvorrichtung ist elektrisch isolierend ausgeführt, so dass über die Kupplungsvorrichtung kein elektrischer Strom geleitet werden bzw. fließen kann. Dadurch kann anders als beim Stand der Technik auf eine elektrisch isolierende Wälzlagerung am Motor verzichtet werden.

Da die erste und die zweite Gelenkvorrichtung der erfindungsgemäßen Kupplungsvorrichtung fadenverstärkt sind, weisen die Kupplungsvorrichtungen gemäß der Erfindung verglichen mit dem Stand der Technik eine erhöhte Leistungsdichte gegenüber den aus dem Stand der Technik bekannten Gummielementen auf. Die Fadenverstärkung der Gelenkvorrichtungen führt zu einer erhöhten Zugfestigkeit, so dass bei gleicher Festigkeitsauslegung ein erheblich geringerer Bauraum für die fadenverstärkten Gelenkvorrichtung und somit die Kupplungsvorrichtungen insgesamt benötigt wird.

Gemäß einer Ausführungsform der Erfindung kann der Verbindungsbereich in axialer Richtung von wenigstens einer von dem ersten Flansch abgewandten axialen Fläche der ersten fadenverstärkten Gelenkvorrichtung und wenigstens einer von dem zweiten Flansch abgewandten axialen Fläche der zweiten fadenverstärkten Gelenkvorrichtung begrenzt werden. Die den Verbindungsbereich definierenden axialen Flächen der ersten fadenverstärkten Gelenkvorrichtung und der zweiten fadenverstärkten Gelenkvorrichtung können einander gegenüberliegen.

Die erste fadenverstärkte Gelenkvorrichtung und die zweite fadenverstärkte Gelenkvorrichtung können über Befestigungsmittel mit dem ersten und dem zweiten Flansch verbunden werden. Ferner kann auch die wenigstens eine Verbindungsanordnung mit der ersten fadenverstärkte Gelenkvorrichtung und der zweiten fadenverstärkte Gelenkvorrichtung über Befestigungsmittel verbunden sein. Die Befestigungsmittel können Schrauben, Bolzen oder ähnliches sein.

Die erste fadenverstärkte Gelenkvorrichtung kann ausgehend von dem Verbindungsbereich über Befestigungsmittel mit der wenigstens einen Verbindungsanordnung und dem wenigstens einen ersten Flansch verbunden werden. Die zweite fadenverstärkte Gelenkvorrichtung kann ausgehend von dem Verbindungsbereich über Befestigungsmittel mit der wenigstens einen Verbindungsanordnung und dem zweiten Flansch verbunden sein. Wie bereits erwähnt, können die Befestigungsmittel beispielsweise Schrauben sein. In diesem Fall werden die Schrauben ausgehend von dem Verbindungsbereich eingeschraubt, der zwischen den beiden fadenverstärkten Gelenkvorrichtungen festgelegt wird. Die Schraubenköpfe der Schrauben zur Verbindung der fadenverstärkten Gelenkvorrichtungen mit einem der Flansche und zur Verbindung der Gelenkvorrichtungen mit der wenigstens einen Verbindungsanordnung befinden sich allesamt innerhalb des Verbindungsbereichs, der sich in axialer Richtung zwischen der ersten fadenverstärkten Gelenkvorrichtung und der zweiten fadenverstärkten Gelenkvorrichtung erstreckt. Dadurch wird sichergestellt, dass jeweils von einer axialen Seite der fadenverstärkten Gelenkvorrichtungen die fadenverstärkten Gelenkvorrichtungen sowohl mit dem ihnen zugeordneten Flansch als auch mit der wenigstens einen Verbindungsanordnung verbunden werden können. Mit anderen Worten sind die Schraubenköpfe der Schrauben immer im Verbindungsbereich zugänglich, d.h. zum Lösen und zum Anziehen der Schrauben.

Die wenigstens eine erste fadenverstärkte Gelenkvorrichtung und die wenigstens eine zweite fadenverstärkte Gelenkvorrichtung können wenigstens ein erstes Kopplungselement, das der wenigstens einen Verbindungsanordnung zugeordnet ist, und wenigstens ein zweites Kopplungselement aufweisen, das dem entsprechenden ersten oder zweiten Flansch zugeordnet ist. Die fadenverstärkten Gelenkvorrichtungen können somit zumindest zwei Arten von Kopplungselementen umfassen. Das wenigstens eine erste Kopplungselement ist zum Koppeln der fadenverstärkten Gelenkvorrichtung mit der Verbindungsanordnung vorgesehen. Das wenigstens eine zweite Kopplungselement ist zum Koppeln bzw. zum Verbinden mit einem der Flansche ausgebildet. Das wenigstens eine erste Kopplungselement und das wenigstens eine zweite Kopplungselement können mit Befestigungsmitteln zusammenwirken, um eine Kopplung zwischen den fadenverstärkten Gelenkvorrichtungen, der wenigstens einen Verbindungsanordnung und einem von ersten oder zweiten Flansch herzustellen. Das wenigstens eine Kopplungselement kann einen Abschnitt mit einem vorbestimmten Schraubenkopf aufweisen. Dieser Abschnitt des wenigstens einen Kopplungselements kann beispielsweise die Außenkontur eines vorbestimmten Schraubenkopfs aufweisen. Dieser vorbestimmte Schraubenkopf kann beispielsweise ein Sechskant-Kopf sein. An den vorbestimmten Schraubenkopf des wenigstens einen ersten Kopplungselements kann sich die wenigstens eine Verbindungsanordnung anlegen.

Um beim Verbinden der Verbindungsanordnung mit einer der fadenverstärkten Gelenkvorrichtungen Schäden an der fadenverstärkten Gelenkvorrichtung zu verhindern, kann es notwendig sein, das wenigstens eine erste Kopplungselement an seinem Schraubenkopfabschnitt mit einem Schraubenschlüssel gegenzuhalten. Damit der Schraubenschlüssel exakt positioniert werden kann und auch über das Gegenhalten mit dem Schraubenschlüssel keine Spannungen in die fadenverstärkte Gelenkvorrichtung eingebracht werden, kann eine Positioniervorrichtung für den Schraubenschlüssel vorgesehen sein. Diese Positioniervorrichtung fixiert den Schraubenschlüssel in seiner vorbestimmten Position zum Gegenhalten, so dass über den Schraubenschlüssel keine Spannungen in die fadenverstärkte Gelenkvorrichtung eingebracht werden können. Die Positioniervorrichtung kann beispielsweise einen Stift aufweisen, der mit einer entsprechenden Ausnehmung in dem Schraubenschlüssel und/oder der Verbindungsanordnung zusammenwirkt.

Die wenigstens eine Verbindungsanordnung kann sich an wenigstens einen Anlageabschnitt des wenigstens einen ersten Kopplungselements anlegen. Der Anlageabschnitt kann ein Abschnitt mit einem vorbestimmten Schraubenkopf sein. Der Anlageabschnitt kann gemäß dieser Ausführungsform beispielsweise die Außenkontur eines vorbestimmten Schraubenkopfs aufweisen. Beispielsweise kann der Anlageabschnitt des ersten Kopplungselements in Form eines Sechskantkopfes ausgebildet sein.

Durch das wenigstens eine zweite Kopplungselement können sich Befestigungsmittel zur Verbindung mit dem ersten Flansch oder dem zweiten Flansch erstrecken. Das wenigstens eine erste Kopplungselement kann Befestigungsmittel zur Verbindung der wenigstens einen Verbindungsanordnung mit der ersten fadenverstärkten Gelenkvorrichtung oder der zweiten fadenverstärkten Gelenkvorrichtung abschnittsweise aufnehmen. Die Befestigungsmittel, die sich durch das wenigstens eine zweite Kopplungselement erstrecken, koppeln eine der fadenverstärkten Gelenkvorrichtungen mit dem jeweiligen Flansch. Dazu gelangen die Befestigungsmittel mit dem Flansch in befestigenden Eingriff. Die Befestigungsmittel, die sich durch das wenigstens eine zweite Kopplungselement erstrecken, können beispielsweise in einer entsprechenden Öffnung in einem der Flansche abschnittsweise aufgenommen werden und derart eine Verbindung zwischen der fadenverstärkten Gelenkvorrichtung und dem Flansch herstellen. Die fadenverstärkte Gelenkvorrichtung kann beispielsweise über Befestigungsmittel in Form von Schrauben, die sich durch das wenigstens eine zweite Kopplungselement erstrecken, mit einem der Flansch verschraubt sein. Im Gegensatz dazu kann das wenigstens eine erste Kopplungselement Befestigungsmittel zur Verbindung der Verbindungsanordnung mit einer der fadenverstärkten Gelenkvorrichtungen aufnehmen und so eine Verbindung herstellen. Die ersten Kopplungselemente können beispielsweise ein Innengewinde aufweisen, in das die Befestigungsmittel zur Befestigung der fadenverstärkten Gelenkvorrichtung an der Verbindungsanordnung eingeschraubt werden können.

Gemäß einer Ausführungsform der Erfindung kann die wenigstens eine Verbindungsanordnung wenigstens ein erstes Teil und wenigstens ein zweites Teil aufweisen. Die wenigstens eine Verbindungsanordnung kann dementsprechend mehrteilig ausgebildet sein. Das wenigstens eine erste Teil und das wenigstens eine zweite Teil der wenigstens einen Verbindungsanordnung können identisch ausgebildet sein. Dadurch können die Herstellungskosten der Kupplungsvorrichtung aufgrund der höheren Stückzahl für die identischen ersten und zweiten Teile reduziert werden.

Das wenigstens eine erste Teil und das wenigstens eine zweite Teil der wenigstens einen Verbindungsanordnung können über korrespondierende Verzahnungen miteinander drehmomentübertragend gekoppelt sein. Das wenigstens eine erste Teil und das wenigstens eine zweite Teil weisen dazu vorzugsweise an einem zentrumnahen Bereich bzw. einem der Mittelachse der Kupplungsvorrichtung nahen Bereich jeweils eine Verzahnung auf, die zur drehmomentübertragenden Kopplung zwischen den beiden Teilen ineinander greift. Neben der Verbindung über die Verzahnung können die beiden Teile der wenigstens einen Verbindungsanordnung auch über wenigstens ein Befestigungsmittel miteinander verbunden sein. Das wenigstens eine erste Teil und das wenigstens eine zweite Teil können auch ohne Verzahnung, beispielsweise ausschließlich mit Befestigungsmitteln miteinander verbunden werden. In diesem Fall können das wenigstens eine erste Teil und das wenigstens eine zweite Teil nur mit regelmäßigen Oberflächen ausgebildet sein. Es können somit das erste Teil mit dem ersten Flansch und das zweite Teil mit dem zweiten Flansch verbunden werden. Der erste Flansch kann dabei mit einem Abschnitt eines Antriebstrangs und der zweite Flansch mit einem weiteren Abschnitt eines Antriebstrangs in Verbindung stehen. In diesem Zustand können dann die beiden Abschnitte des Antriebsstrangs aufeinander zu verlagert und über das erste Teil und das zweite Teil der Verbindungsanordnung verbunden werden. In diesem Fall können das erste Teil und das zweite Teil der Verbindungsanordnung ausschließlich über Befestigungsmittel, wie z.B. Schrauben, miteinander verbunden werden. Eine derartige Montage ist jedoch nur bei sehr speziellen Antriebsträngen notwendig. Im Allgemeinen wird bei der Kupplungsvorrichtung gemäß der Erfindung immer die wenigstens eine Verbindungsanordnung als eine Baugruppe radial eingeführt und dann mit den Gelenkvorrichtungen und den Flanschen verbunden werden.

Die wenigstens eine Verbindungsanordnung kann ferner derart ausgebildet sein, dass sich in einem zentrumsnahen Bereich, d.h. in einem Bereich nahe der Rotationsachse der Kupplungsvorrichtung, möglichst viel Masse befindet. Dadurch kann das Massenträgheitsmoment gering gehalten werden. Mit einem geringen Massenträgheitsmoment können auch die dynamischen Eigenschaften der Kupplungsvorrichtung gesteigert werden.

Gemäß einer Ausführungsform der Erfindung kann die Kupplungsvorrichtung wenigstens eine Zentriereinrichtung zum radialen Abstützen der wenigstens einen Verbindungsanordnung aufweisen. Die wenigstens eine Zentriereinrichtung kann wenigstens eine Gelenkanordnung aufweisen, die in axialer Richtung zwischen der ersten fadenverstärkten Gelenkvorrichtung und der zweiten fadenverstärkten Gelenkvorrichtung angeordnet ist.

Die radiale Abstützung der wenigstens einen Verbindungsanordnung erfolgt über die wenigstens eine Zentriereinrichtung. Die mittels der wenigstens einen Zentriereinrichtung erfolgende radiale Abstützung der wenigstens einen Verbindungsanordnung dient bei der erfindungsgemäßen Kupplungsvorrichtung zur Reduzierung von dynamische Unwuchten bzw. den damit verbundenen Schwingungen. Die wenigstens eine Zentriereinrichtung bzw. deren wenigstens eine Gelenkanordnung kann die wenigstens eine Verbindungsanordnung insbesondere auch bei einem radialen Versatz und/oder einem Winkelversatz radial abstützen. Die wenigstens eine Gelenkanordnung lässt Winkelversätze und Radialversätze zwischen den zu verbindenden Wellenabschnitten zu, stützt jedoch gleichzeitig die wenigstens eine Verbindungsanordnung ab. Dadurch können dynamsiche Unwuchten reduziert werden. Ferner können mit der Kupplungsvorrichtung auch Axialversätze zwischen den zu verbindenden Wellenabschnitten kompensiert werden.

Die Zentrierungseinrichtung kann die Verbindungsanordnung radial abstützen, ohne dass Gleitlager oder Gleitbewegungen notwendig sind. Da die wenigstens eine Gelenkanordnung der wenigstens einen Zentriereinrichtung zwischen der ersten fadenverstärkten Gelenkvorrichtung und der zweiten fadenverstärkten Gelenkvorrichtung angeordnet ist, müssen die Anschlusstücke an den Wellen für die erfindungsgemäße Kupplungsvorrichtung nicht verändert werden.

Die wenigstens eine Gelenkanordnung ist in axialer Richtung zwischen der ersten fadenverstärkten Gelenkvorrichtung und der zweiten fadenverstärkten Gelenkvorrichtung angeordnet. Die wenigstens eine Gelenkanordnung ist somit in axialer Richtung sowohl von der ersten fadenverstärkten Gelenkvorrichtung als auch von der zweiten fadenverstärkten Gelenkvorrichtung beabstandet. Die wenigstens eine Gelenkanordnung ist in axialer Richtung außerhalb der axialen Erstreckung der ersten fadenverstärkten Gelenkvorrichtung und der zweiten fadenverstärkten Gelenkvorrichtung angeordnet. Um die wenigstens eine Verbindungsanordnung in radialer Richtung abstützen zu können, ist die wenigstens eine Zentriereinrichtung mit ihrer wenigstens einen Gelenkanordnung radial steif, aber axial weich, torsional weich und auch beugeweich ausgebildet.

Da die wenigstens eine Gelenkanordnung in axialer Richtung zwischen der ersten fadenverstärkten Gelenkvorrichtung und der zweiten fadenverstärkten Gelenkvorrichtung angeordnet ist, ist die wenigstens eine Gelenkanordnung axial zu den Beugepunkten der ersten fadenverstärkten Gelenkvorrichtung und der zweiten fadenverstärkten Gelenkanordnung versetzt angeordnet. Die Beugepunkte der ersten fadenverstärkten Gelenkvorrichtung und der zweiten fadenverstärkten Gelenkvorrichtung befinden sich auf der Mittelachse der fadenverstärkten Gelenkvorrichtungen innerhalb der axialen Erstreckung der fadenverstärkten Gelenkvorrichtungen. Unter anderem kann dadurch erreicht werden, dass keine Gleitlager und auch keine Gleitbewegungen für die radiale Abstützung der wenigstens einen Verbindungsanordnung notwendig sind.

Gemäß einer Ausführungsform kann die wenigstens eine Gelenkanordnung in axialer Richtung jeweils einen vorbestimmten Abstand zu der ersten fadenverstärkten Gelenkvorrichtung und der zweiten fadenverstärkten Gelenkvorrichtung aufweisen. Die wenigstens eine Gelenkanordnung kann somit zu der ersten fadenverstärkten Gelenkvorrichtung einen ersten Abstand und zur zweiten fadenverstärkten Gelenkvorrichtung einen zweiten Abstand in axialer Richtung aufweisen. Der erste Abstand und der zweite Abstand können gleich sein.

Die wenigstens eine Gelenkanordnung kann zwischen einander zugewandten axialen Endflächen des ersten Flanschs und des zweiten Flanschs angeordnet sein. Die axialen Endflächen des ersten Flanschs und des zweiten Flanschs können an einem rohrförmigen Abschnitt jeweils des ersten Flanschs und des zweiten Flanschs, d. h. an den Stirnseiten der rohrförmigen Abschnitte, ausgebildet sein. Der rohrförmige Abschnitt des ersten Flansches und des zweiten Flansches kann sich dabei durch eine zentrale Öffnung jeweils in der ersten fadenverstärkten Gelenkvorrichtung und der zweiten fadenverstärkten Gelenkvorrichtung erstrecken.

Die wenigstens eine Gelenkanordnung kann zwischen einander zugewandten axialen Seiten der ersten fadenverstärkten Gelenkvorrichtung und der zweiten fadenverstärkten Gelenkvorrichtung angeordnet sein. Die wenigstens eine erste fadenverstärkte Gelenkvorrichtung und die wenigstens eine zweite fadenverstärkte Gelenkvorrichtung können in axialer Richtung zwischen sich einen Raum begrenzen, in dem neben der wenigstens einen Verbindungsanordnung auch die wenigstens eine Zentriereinrichtung mit ihrer wenigstens einen Gelenkanordnung vollständig angeordnet ist. Die wenigstens eine Zentriereinrichtung kann zumindest abschnittsweise die wenigstens eine Verbindungsanordnung radial umgeben und die wenigstens eine Verbindungsanordnung radial abstützen.

Gemäß einer Ausführungsform kann dem ersten Flansch wenigstens ein Kopplungselement und dem zweiten Flansch wenigstens ein Kopplungselement zum Koppeln des ersten Flansches und des zweiten Flansches mit der wenigstens einen Gelenkanordnung zugeordnet sein. Die Kopplungselemente können an Positionen mit der wenigstens einen Gelenkanordnung gekoppelt sein, die sich in axialer Richtung zwischen der wenigstens einen ersten fadenverstärkten Gelenkvorrichtung und der wenigstens einen zweiten fadenverstärkten Gelenkvorrichtung befinden. Die Kopplungspositionen können in axialer Richtung um einen vorbestimmten Abstand von der ersten fadenverstärkten Gelenkvorrichtung und der zweiten fadenverstärkten Gelenkvorrichtung beabstandet sein.

Die wenigstens eine Gelenkanordnung kann gemäß einer Weiterbildung der Erfindung wenigstens eine erste Gelenkmembran und wenigstens eine zweite Gelenkmembran aufweisen. Beispielsweise kann die wenigstens eine erste Gelenkmembran über das wenigstens eine Kopplungselement mit dem ersten Flansch und die wenigstens eine zweite Gelenkmembran kann ebenfalls über wenigstens ein Kopplungselement mit dem zweiten Flansch gekoppelt sein.

Der Abstand zwischen der wenigstens einen ersten Gelenkmembran und der wenigstens einen zweiten Gelenkmembran in axialer Richtung kann kleiner als der Abstand zwischen der ersten fadenverstärkten Gelenkvorrichtung und der zweiten fadenverstärkten Gelenkvorrichtung sein. Anders ausgedrückt ist die wenigstens eine Gelenkanordnung mit der wenigstens einen ersten Gelenkmembran und der wenigstens einen zweiten Gelenkmembran von den axialen Seiten der fadenverstärkten Gelenkvorrichtungen beabstandet, die einander zugewandt sind. Der Abstand zwischen der wenigstens einen ersten Gelenkmembran und der wenigstens einen zweiten Gelenkmembran entspricht der kardanischen Länge der wenigstens einen Gelenkanordnung. Die kardanische Länge der Kupplungsvorrichtung insgesamt wird vom Abstand in axialer Richtung zwischen der ersten fadenverstärkten Gelenkvorrichtung und der zweiten fadenverstärkten Gelenkvorrichtung bestimmt. Die kardanische Länge der wenigstens einen Zentriereinrichtung kann somit kürzer als die kardanische Länge der Kupplungsvorrichtung sein.

Gemäß einer Ausführungsform kann die wenigstens eine Gelenkanordnung wenigstens eine dritte Gelenkmembran aufweisen. Die wenigstens eine dritte Gelenkmembran kann in axialer Richtung zwischen der wenigstens einen ersten und der wenigstens einen zweiten Gelenkmembran angeordnet sein. Die wenigstens eine dritte Gelenkmembran kann mit der wenigstens einen Verbindungsanordnung verbunden sein. Anders ausgedrückt kann über die wenigstens eine dritte Gelenkmembran eine Verbindung zwischen der wenigstens einen Verbindungsanordnung und der wenigstens einen Zentriereinrichtung bzw. der wenigstens einen Gelenkanordnung der Zentriereinrichtung hergestellt werden. Mit anderen Worten kann die wenigstens eine dritte Gelenkmembran die wenigstens eine Verbindungsanordnung mit der wenigstens einen Zentriereinrichtung radial zur radialen Abstützung der wenigstens einen Verbindungsanordnung verbinden.

Die Gelenkmembranen der wenigstens einen Gelenkanordnung können gemäß einer Weiterbildung der Erfindung miteinander verbunden sein. Anders ausgedrückt können die wenigstens eine erste Gelenkmembran, die wenigstens eine zweite Gelenkmembran und die wenigstens eine dritte Gelenkmembran miteinander verbunden sein.

Sämtliche Gelenkmembranen der wenigstens einen Gelenkanordnung können zwischen den einander zugewandten axialen Seitenflächen der ersten fadenverstärkten Gelenkvorrichtung und der zweiten fadenverstärkten Gelenkvorrichtung angeordnet sein. Die Gelenkmembranen der wenigstens einen Gelenkanordnung können dabei jeweils von den fadenverstärkten Gelenkvorrichtungen um einen vorbestimmten axialen Abstand beabstandet sein. Die Gelenkmembranen der wenigstens einen Gelenkanordnung können in axialer Richtung außerhalb der ersten fadenverstärkten Gelenkvorrichtung und der zweiten fadenverstärkten Gelenkvorrichtung angeordnet sein.

Die Gelenkmembranen der wenigstens einen Gelenkanordnung können aus Blech oder aus einem fadenverstärkten Elastomer hergestellt sein. Die Gelenkmembranen können jedoch auch aus anderen Materialen hergestellt sein.

Die Gelenkmembranen der wenigstens einen Gelenkanordnung können sich in radialer Richtung erstrecken. Die Gelenkmembranen können Arme aufweisen, die sich speichenförmig von einem zentralen Bereich der Gelenkmembran nach radial außen erstrecken. Die Gelenkmembranen können an den radialen Enden ihrer Arme jeweils Kopplungselemente aufweisen, über die die Gelenkmembranen mit weiteren Elementen der Zentriereinrichtung koppelbar sind. Die Gelenkmembranen der wenigstens einen Gelenkanordnung können in radialer Richtung außerhalb der wenigstens einen Verbindungsanordnung miteinander verbunden sein.

Die wenigstens eine erste Gelenkmembran kann dem ersten Flansch und die wenigstens eine zweite Gelenkmembran kann dem zweiten Flansch zugeordnet sein, wobei die erste Gelenkmembran und die zweite Gelenkmembran mit dem jeweiligen Flansch gekoppelt sein können.

Die vorliegende Erfindung betrifft ferner eine fadenverstärkte Gelenkvorrichtung für eine Kupplungsvorrichtung eines Fahrzeugantriebs. Die fadenverstärkte Gelenkvorrichtung gemäß der Erfindung umfasst die in dem unabhängigen Anspruch 12 angegebenen Merkmale.

Weitere Ausführungsformen der Erfindung sind in den abhängigen Ansprüchen angegeben.

Die fadenverstärkte Gelenkvorrichtung gemäß der Erfindung kann beispielsweise mit einer Kupplungsvorrichtung der voranstehend beschriebenen Art verwendet werden.

Die fadenverstärkte Gelenkvorrichtung gemäß der Erfindung umfasst eine Mehrzahl von ersten Kopplungselementen, eine Mehrzahl von zweiten Kopplungselementen, und wenigstens ein Fadenpaket. Das wenigstens eine Fadenpaket kann wenigstens ein erstes Kopplungselement und wenigstens ein zweites Kopplungselement kraftübertragend miteinander koppeln. Ferner umfasst die fadenverstärkte Gelenkvorrichtung wenigstens eine Stützeinrichtung zur axialen Führung des wenigstens einen Fadenpakets an wenigstens einem ersten oder wenigstens einem zweiten Kopplungselement. Das wenigstens eine Fadenpaket und die Kopplungselemente sind zumindest teilweise von wenigstens einem elastischen Körper umgeben. Die ersten Kopplungselemente weisen wenigstens einen Abschnitt mit einem Innengewinde auf. Die ersten Kopplungselemente sind wechselweise mit den zweiten Kopplungselementen angeordnet.

Der wenigstens eine elastische Körper dient unter anderem zur Aufnahme von Druckkräften, die im Betrieb der Kupplungsvorrichtung bei der Drehmomentübertragung auftreten können. In diesem Zusammenhang kann die wenigstens eine fadenverstärkte Gelenkvorrichtung von mehreren elastischen Gelenkkörpern gebildet werden, die jeweils wenigstens ein Fadenpaket aufweisen. Anders ausgedrückt werden mehrere elastische Körper miteinander verbunden, um die fadenverstärkte Gelenkvorrichtung zu bilden und Drehmomente übertragen zu können. Alternativ kann die fadenverstärkte Gelenkvorrichtung einen elastischen Körper aufweisen, in den sämtliche Komponenten der fadenverstärkten Gelenkvorrichtung zumindest teilweise eingebettet sein können. Der elastische Körper oder die elastischen Körper können beispielsweise aus einem Elastomer, einem thermoplastischen Elastomer, einem Polymer oder Gummi hergestellt sein. Die Fadenverstärkung begrenzt die Dehnbelastungen in dem wenigstens einen elastischen Körper. Dadurch werden unerwünschte Relaxationserscheinungen in dem wenigstens einen elastischen Körper weiter verringert.

Das wenigstens eine Fadenpaket kann laschenförmig ausgebildet sein, und wenigstens ein erstes und wenigstens ein zweites Kopplungselement umschlingen und derart kraftübertragend koppeln. Die fadenverstärkte Gelenkvorrichtung kann auch eine Mehrzahl von Fadenpakten aufweisen. Die laschenförmigen Fadenpakete können dabei ringförmig angeordnet und jeweils über wenigstens ein erstes oder ein zweites Kopplungselement miteinander verbunden sein. Ein erstes oder ein zweites Kopplungselement kann beispielsweise mit zwei laschenförmigen Fadenpaketen verbunden werden, wobei eines der Fadenpakete jeweils auf Zug belastet wird und das andere in einer Druckstrecke angeordnet ist, in der über den wenigstens einen elastischen Körper Druckkräfte übertragen werden.

Die ersten Kopplungselemente können wenigstens einen Abschnitt mit einem Innengewinde aufweisen. Da die ersten Kopplungselemente der wenigstens einen Verbindungsanordnung zugeordnet ist, kann die wenigstens eine Verbindungsanordnung über ein Befestigungsmittel, beispielsweise in Form einer Schraube, direkt mit einer der fadenverstärkten Gelenkvorrichtungen verbunden werden. Anders ausgedrückt kann beispielsweise eine Schraube in das Innengewinde des ersten Kopplungselements der fadenverstärkten Gelenkvorrichtung eingeschraubt werden, um die fadenverstärkte Gelenkvorrichtung mit der wenigstens einen Verbindungsanordnung zu verbinden.

Die ersten Kopplungselemente können einen Abschnitt mit einem vorbestimmten Schraubenkopf aufweisen. Weisen die ersten Kopplungselemente ein Gewinde auf, kann es unter gewissen Umständen nötig sein, beim Einschrauben einer Schraube in eines der ersten Kopplungselemente, dieses erste Kopplungselement mit einem Schraubenschlüssel gegenzuhalten. Dadurch soll beispielsweise verhindert werden, dass während des Verschraubens ein Drehmoment auf die fadenverstärkte Gelenkvorrichtung übertragen wird. Aus diesem Grund kann an dem wenigstens einen Kopplungselement ein Schraubenkopf zum Gegenhalten vorgesehen sein. Der vorbestimmte Schraubenkopf kann beispielsweise ein Sechskant sein.

Die ersten und die zweiten Kopplungselemente können jeweils in wenigstens einer Außenbuchse entnommen sein. Die Außenbuchsen des elastischen Gelenkkörpers können identisch ausgebildet sein, unabhängig davon, ob sie ein erstes Kopplungselement oder ein zweites Kopplungselement aufnehmen.

Die ersten Kopplungselemente können einen radialen Abstützabschnitt aufweisen, an dem sich die Außenbuchsen abstützen können. Der radiale Abstützabschnitt kann ein radial umlaufender Vorsprung sein. Der Abstützabschnitt kann sich an den Abschnitt mit dem vorbestimmten Schraubenkopf anschließen.

Zumindest die ersten Kopplungselemente können wenigstens ein Sicherungselement aufweisen. Das wenigstens eine Sicherungselement dient zur Sicherung der ersten Kopplungselemente an der fadenverstärkten Gelenkvorrichtung. Insbesondere in dem Fall, wenn die ersten Kopplungselemente ein Innengewinde aufweisen, sorgt das wenigstens eine Sicherungselement dafür, dass die ersten Kopplungselemente im Betrieb der Kupplungsvorrichtung aus der fadenverstärkten Gelenkvorrichtung nicht herausgezogen werden können. Das wenigstens eine Sicherungselement kann dementsprechend dafür sorgen, dass die ersten Kopplungselemente auch im Betrieb der fadenverstärkten Gelenkvorrichtung an ihrer vorbestimmten Position an der fadenverstärkten Gelenkvorrichtung verbleiben.

Das wenigstens eine Sicherungselement kann an einem axialen Endbereich des wenigstens einen ersten Kopplungselements angeordnet sein. Das wenigstens eine Sicherungselement kann in Form einer Schraube ausgebildet sein und in eines der ersten Kopplungselemente eingeschraubt werden, wenn die ersten Kopplungselemente ein Innengewinde aufweisen. Das wenigstens eine Sicherungselement kann direkt bei der Herstellung der fadenverstärkten Gelenkvorrichtung von deren Hersteller an der fadenverstärkten Gelenkvorrichtung angebracht werden.

Das wenigstens eine Sicherungselement kann derart ausgebildet sein, dass ein unbeabsichtigtes Lösen des wenigstens einen Sicherungselements verhindert werden kann. Das wenigstens eine Sicherungselement kann beispielsweise in Form einer Sicherheitsschraube, Einwegschraube oder Abrissschraube ausgebildet sein, die nach dem Anziehen der Schraube nicht mehr gelöst werden kann. Dadurch soll verhindert werden, dass das wenigstens eine Sicherungselement fälschlicherweise oder unbeabsichtigt bei der Befestigung der fadenverstärkten Gelenkvorrichtung gelöst werden kann. Das Lösen eines derartigen Sicherungselements ist nur mit einem erheblichen zeitlichen Aufwand und/oder Spezialwerkzeug möglich. Wird das wenigstens eine Sicherungselement in Form einer Schraube ausgebildet, kann das Sicherungselement zusätzlich Mittel zur Schraubensicherung aufweisen, so dass ein Lösen des Sicherungselements beispielsweise durch im Betrieb auftretende Vibrationen oder ähnliches nicht möglich ist. Derartige Schraubensicherungen können mechanischer Natur, wie z.B. Sicherungsringe oder Sprengringe, oder chemischer Natur sein, wie z.B. Klebstoffe oder ähnliches. Beispielsweise kann hier das von der Fa. Henkel unter der Marke Loctite vertriebene Schraubensicherungsmittel verwendet werden.

Gemäß einer Ausführungsform kann die wenigstens eine Verbindungsanordnung wenigstens ein Zwischenteil aufweisen. Das wenigstens eine Zwischenteil kann in axialer Richtung zwischen dem ersten Teil und dem zweiten Teil angeordnet sein. Mit anderen Worten kann die Verbindungsanordnung dreiteilig ausgeführt sein. Das erste Teil und das zweite Teil können einen Grundkörper aufweisen, der in axialer Richtung relativ flach bzw. dünn ausgebildet ist.

Das wenigstens eine erste Teil und das wenigstens eine zweite Teil können wenigstens einen Vorsprung aufweisen. Der wenigstens eine Vorsprung kann mit wenigstens einer Öffnung für wenigstens ein Befestigungsmittel versehen sein. Das wenigstens eine Befestigungsmittel kann sich durch die Öffnung erstrecken. Der wenigstens eine Vorsprung erstreckt sich in axialer Richtung. Der wenigstens eine Vorsprung kann sich ausgehend von dem wenigstens einen Grundkörper des ersten Teils und des zweiten Teils in axialer Richtung erstrecken. Beispielsweise kann sich der wenigstens eine Vorsprung im montierten Zustand der Kupplungsvorrichtung in Richtung der ersten fadenverstärkten Gelenkvorrichtung oder der zweiten fadenverstärkten Gelenkvorrichtung erstrecken. Die wenigstens eine Öffnung des wenigstens einen Vorsprungs kann gestuft ausgebildet sein. Es kann in der Öffnung ein Absatz vorgesehen sein, ab dem sich der Durchmesser der Öffnung ändert. Die Öffnung kann derart ausgebildet sein, dass sie wenigstens ein Befestigungsmittel zumindest abschnittsweise aufnehmen kann. Das sich durch die wenigstens eine Öffnung des wenigstens einen Vorsprungs erstreckende Befestigungsmittel kann zur Verbindung des ersten Teils oder des zweiten Teils mit der dem ersten Teil oder dem zweiten Teil zugeordneten ersten oder zweiten fadenverstärkten Gelenkvorrichtung dienen. Das wenigstens eine Befestigungsmittel kann eine Kopfschraube beispielsweise mit einem Innensechskant-Schraubenkopf sein. Der Schraubenkopf der Schraube kann sich an einem Absatz in der Öffnung des Vorsprungs anlegen. Der Schraubenkopf kann in der Öffnung in dem wenigstens einen Vorsprung zumindest abschnittweise versenkt werden, so dass der Schraubenkopf bei der Montage der Kupplungsvorrichtung keine bzw. nahezu keine Behinderung darstellt.

Das wenigstens eine Zwischenteil kann lösbar mit dem wenigstens einen ersten Teil und dem wenigstens einen zweiten Teil derart verbunden sein, dass es in radialer Richtung aus der Kupplungsvorrichtung entnehmbar ist. Dadurch wird erreicht, dass das wenigstens eine erste Teil, das wenigstens eine zweite Teil und auch das wenigstens eine Mittelteil in radialer Richtung eingesetzt und im Verbindungsbereich miteinander verbunden werden können. Ferner können auf diese Weise das wenigstens eine erste Teil und das wenigstens eine zweite Teil mit der ersten fadenverstärkten Gelenkvorrichtung oder der zweiten fadenverstärkten Gelenkvorrichtung verbunden werden. Mit anderen Worten können ausgehend von dem Verbindungsbereich die erste fadenverstärkte Gelenkvorrichtung mit dem ersten Teil der wenigstens einen Verbindungsanordnung und dem ersten Flansch sowie die zweite fadenverstärkte Gelenkvorrichtung mit dem wenigstens einen zweiten Teil der wenigstens einen Verbindungsanordnung und dem zweiten Flansch verbindbar sein.

Es ist somit möglich, dass ausgehend von dem Verbindungsbereich sämtliche Komponenten der Kupplungsvorrichtung miteinander verbunden bzw. aneinander befestigt werden. Durch die Dimensionierung des wenigstens einen Mittelteils kann die Kupplungsvorrichtung flexibel an verschiedene Fahrzeugtypen bzw. verschiedene Antriebsstränge von Schienenfahrzeugen angepasst werden. Das erste Teil und das zweite Teil der wenigstens einen Verbindungsanordnung können mit dem wenigstens einen Zwischenteil verschraubt sein. Die Schrauben können sich jeweils aus Richtung der ersten und/oder der zweiten fadenverstärkten Gelenkvorrichtung in das wenigstens eine Zwischenteil hinein erstrecken. Die Schraubenköpfe der Schrauben können sich an das erste Teil und/oder das zweite Teil der wenigstens einen Verbindungsanordnung anlegen und sich durch das erste Teil und das zweite Teil in das wenigstens eine Mittelteil hinein erstrecken. Die Schrauben können sich auch durch das erste Teil, das Mittelteil und das zweite Teil erstrecken und auf Seiten des ersten oder zweiten Teils mit einer Mutter gekontert werden.

Die wenigstens eine Verbindungsanordnung kann Positioniermittel aufweisen, die zur Positionierung der einzelnen Teile der wenigstens einen Verbindungsanordnung aneinander dienen. Bei einer zweiteiligen Verbindungsanordnung können nur das erste Teil und das zweite Teil Positioniermittel aufweisen.

Die Positioniermittel können von korrespondierenden Vorsprüngen und Ausnehmungen an dem ersten Teil, dem zweiten Teil und dem Mittelteil gebildet werden.

Zwischen den einzelnen Teilen der Verbindungsanordnung kann über die axial ineinander greifenden Positioniermittel ein Kraftschluss oder ein Formschluss hergestellt werden. Diese axial ineinander greifenden Positioniermittel behindern die radiale Entnahme der Verbindungsanordnung bzw. der einzelnen Teile der Verbindungsanordnung nicht, da die wenigstens eine fadenverstärkte Gelenkvorrichtung in axialer Richtung in einem vorbestimmten Maß elastisch bzw. nachgiebig ist. Aufgrund der Nachgiebigkeit der fadenverstärkten Gelenkvorrichtungen in axialer Richtung können die einzelnen Teile der wenigstens einen Verbindungsanordnung bei ihrer radialen Entnahme in axialer Richtung auseinander bewegt werden, wodurch die radiale Entnahme erleichtert wird. Die ineinander eingreifenden Positioniermittel können den Vorteil bereitstellen, dass die Drehmomentübertragung zumindest partiell formschlüssig erfolgen und Unwuchten minimiert werden können.

Das wenigstens eine Zwischenteil kann ringförmig ausgebildet sein.

Die vorliegende Erfindung betrifft ferner eine Antriebsanordnung für ein Schienenfahrzeug mit wenigstens einem Motor und wenigstens einem Getriebe, wobei eine Motorausgangswelle und eine Getriebeeingangswelle über wenigstens eine Kupplungsvorrichtung der voranstehend beschriebenen Art miteinander verbindbar sind.

Die Motorausgangswelle und/oder die Getriebeeingangswelle können wenigstens ein Anschlussstück zur Verbindung mit der wenigstens einen Kupplungsvorrichtung aufweisen. Ein derartiges Anschlussstück wird auf diesem technischen Gebiet häufig auch als "Konus" bezeichnet.

Das wenigstens eine Anschlussstück kann in einer Öffnung des ersten Flanschs und/oder des zweiten Flansches aufgenommen sein.

Das wenigstens eine Anschlussstück kann in einer Öffnung des ersten Flansches oder des zweiten Flansches aufgenommen sein. Die Öffnung des ersten Flansches und/oder des zweiten Flansches erstreckt sich entlang der Mittelachse der Kupplungsvorrichtung. Die Öffnung kann somit in einem zentralen Bereich des ersten Flansches und des zweiten Flansches vorgesehen sein. Die Öffnung kann sich durch einen rohrförmigen Abschnitt des ersten und des zweiten Flansches erstrecken. Der rohrförmige Abschnitt des ersten und des zweiten Flansches kann in einer zentralen Öffnung der ersten oder der zweiten fadenverstärkten Gelenkvorrichtung aufgenommen sein bzw. sich durch die zentrale Öffnung der ersten oder der zweiten fadenverstärkten Gelenkvorrichtung hindurch erstrecken.

Zwischen dem ersten Flansch und/oder dem zweiten Flansch und dem jeweiligen wenigstens einen Anschlussstückkann wenigstens eine Buchse angeordnet sein. Die wenigstens eine Buchse kann eine Verbindung zwischen dem wenigstens einen Anschlussstück und dem ersten Flansch und/oder dem zweiten Flansch herstellen. Der erste Flansch und der zweite Flansch können über einen Presssitz mit dem wenigstens einen Anschlussstück verbunden sein. Ist wenigstens eine Buchse vorgesehen, liegt eine Pressverbindung zwischen dem Anschlussstück der wenigstens einen Buchse und dem Flansch vor. Die wenigstens eine Buchse kann eine Rutschkupplung bilden. Wirkt eine Überlast, d.h. ein zu hohes Drehmoment über das wenigstens eine Anschlussstück auf den ersten Flansch oder den zweiten Flansch ein, lässt die wenigstens eine Buchse eine Relatiwerdrehung zwischen dem wenigstens einen Anschlussstück und dem ersten Flansch oder dem zweiten Flansch zu. Das wenigstens eine Anschlussstück kann bei einer Überlast "rutschen", d.h. sich frei relativ zu dem zugeordneten ersten oder zweiten Flansch verdrehen. Dadurch werden Überlastschäden an der Kupplungsvorrichtung und den an die Kupplungsvorrichtung angeschlossenen Komponenten vermieden. Bei einer Überlast wird der Presssitz zwischen der Außenumfangsfläche der Buchse und dem ersten oder dem zweiten Flansch gelöst, d. h, überwunden, so dass das Anschlussstück mit der Buchse in der Öffnung des Flansches "rutschen" kann.

Gemäß einer Ausführungsform kann wenigstens ein Sicherungsmittel vorgesehen sein. Das wenigstens eine Sicherungselement kann den ersten oder den zweiten Flansch an dem wenigstens einen Anschlussstück halten. Das wenigstens eine Sicherungsmittel kann sich in radialer Richtung erstrecken. Das wenigstens eine Sicherungsmittel kann scheibenförmig ausgebildet sein. Das wenigstens eine Sicherungsmittel kann sich zumindest abschnittsweise an den ersten Flansch oder den zweiten Flansch anlegen. Das wenigstens eine Sicherungsmittel dient insbesondere zur Sicherung des ersten Flansches und des zweiten Flansches in axialer Richtung bei einer Überlast, da sich in diesem Fall das wenigstens eine Anschlussstück relativ zu dem ersten Flansch oder dem zweiten Flansch verdrehen kann. Durch die Relatiwerdrehung zwischen dem Anschlussstück und dem ersten Flansch oder dem zweiten Flansch kann der entsprechende Flansch seinen Halt in axialer Richtung an dem wenigstens einen Anschlussstück verlieren. Das wenigstens eine Sicherungselement kann mit dem wenigstens einen Anschlussstück verschraubt sein. Ferner kann das wenigstens eine Sicherungselement über einen Positionierstift in seine Position an dem wenigstens einen Anschlussstück festgelegt sein.

Das wenigstens eine Anschlussstück kann wenigstens einen sich in radialer Richtung erstreckenden Vorsprung aufweisen. Der wenigstens eine radiale Vorsprung an dem wenigstens einen Anschlussstück kann zur Sicherung der wenigstens einen Buchse in axialer Richtung dienen. Dies gilt insbesondere in dem Fall, in dem sich bei einer Überlast das wenigstens eine Anschlussstück relativ zu dem ersten Flansch oder dem zweiten Flansch frei dreht.

Gemäß einer Ausführungsform kann in dem wenigstens einen Anschlussstück wenigstens eine Zentrierhülse aufgenommen sein. Die wenigstens eine Zentrierhülse kann mit wenigstens einem Zentrierbolzen zusammenwirken. Der wenigstens eine Zentrierbolzen kann an der wenigstens einen Verbindungsanordnung vorgesehen sein. Beispielsweise kann der wenigstens eine Zentrierbolzen an dem ersten oder dem zweiten Teil der wenigstens einen Verbindungsanordnung angeordnet sein. Durch eine Zentrierung wird die radiale Steifigkeit der fadenverstärkten Gelenkvorrichtung erhöht. Dadurch können Unwuchten verhindert bzw. minimiert werden, die bei Radialauslenkungen bei einer "fliegend" gelagerten Verbindungsanordnung auftreten könnten.

Der wenigstens eine Zentrierbolzen kann mit dem ersten Teil oder dem zweiten Teil verschraubt sein. Der wenigstens eine Zentrierbolzen kann in die wenigstens eine Zentrierhülse eingesteckt werden.

Die wenigstens eine Zentrierhülse kann elastisch ausgeführt sein, um Stöße und Schwingungen dämpfen zu können. Die wenigstens eine Zentrierhülse kann ebenfalls dazu dienen, axiale Relativbewegungen zwischen dem ersten Verbindungselement und dem zweiten Verbindungselement der wenigstens einen Zentriereinrichtung über eine vorbestimmte Distanz zuzulassen. Die wenigstens eine Zentrierhülse kann eine Außenhülse und eine Innenhülse aufweisen, die über wenigstens ein elastisches Element miteinander verbunden sind. Die wenigstens eine Zentrierhülse lässt neben den axialen Relativbewegungen auch den Ausgleich von Winkelversätzen zu. Zum Aufnehmen bzw. zum Ausgleich der axialen Relativbewegungen und auch der Winkelversätze wird das elastische Element zwischen Innenbuchse und Außenbuchse elastisch deformiert. Anders ausgedrückt findet dann eine Auslenkung beispielsweise des Zentrierbolzens relativ zu dem Verbindungselement mit der Zentrierhülse unter einer elastischen Deformation des elastischen Elements der wenigstens einen Zentrierhülse statt.

Gemäß einer Ausführungsform kann das wenigstens eine Verbindungselement wenigstens eine Bohrung aufweisen, die zum Anlegen eines vorbestimmten Öldrucks dient. Über die wenigstens eine Bohrung in dem wenigstens einen Verbindungselement kann ein Öldruck an dem Verbindungselement angelegt werden, der derart auf das erste Verbindungselement und den entsprechenden Flansch einwirkt, dass der Flansch von dem ersten Verbindungselement abgepresst werden kann. Dazu kann die wenigstens eine Bohrung beispielsweise mit einer Nut an einer Außenumfangsfläche des Verbindungselements zusammenwirken. Es können auch mehrere Bohrungen in dem wenigstens einem Verbindungselement ausgebildet sein. Eine der Bohrungen kann beispielsweise auch dazu vorgesehen sein, die wenigstens eine Zentrierhülse aus dem ersten Verbindungselement heraus zu lösen. Die Bohrungen können sich in axialer Richtung und in radialer Richtung durch das Verbindungselement erstrecken. Der Öldruck zum Abpressen eines der Flansche von dem Verbindungselement kann beispielsweise 2000 bar betragen. Die Zentrierhülse kann mit einem Öldruck von beispielsweise 200 bar aus dem wenigstens einen Anschlussstück ausgepresst werden.

Die wenigstens eine Gelenkanordnung kann mit dem wenigstens einen Anschlussstück verbunden sein. Das wenigstens eine Anschlussstück kann eine Gewindeöffnung aufweisen, die zur Verbindung mit der wenigstens einen Gelenkanordnung über wenigstens eine Schraube dienen kann. Die erste Gelenkmembran kann mit einem Anschlussstück und die zweite Gelenkmembran kann mit einem weiteren Anschlussstück verbunden sein.

Im Folgenden wird eine Ausführungsform der Erfindung beispielhaft mit Bezug auf die beigefügten Figuren beschrieben. Es stellen dar:
- Fig. 1: eine perspektivische Ansicht einer Kupplungsvorrichtung gemäß der Erfindung;
- Fig. 2: eine Seitenansicht der Kupplungsvorrichtung gemäß der Erfindung;
- Fig. 3: eine Vorderansicht der Kupplungsvorrichtung gemäß der Erfindung;
- Fig. 4: eine Schnittansicht entlang der Schnittlinie III-III in Fig. 3;
- Fig. 5: eine Detailansicht der Schnittansicht gemäß Fig. 5; und
- Figuren 6 bis 9: Ansichten einer Kupplungsvorrichtung gemäß einer zweiten Ausführungsform;
- Figuren 10 bis 13: Ansichten einer Kupplungsvorrichtung gemäß einer dritten Ausführungsform der Erfindung;
- Figuren 14 bis 17: Ansichten einer Kupplungsvorrichtung gemäß einer vierten Ausführungsform der Erfindung;
- Figuren 18 bis 21: Ansichten einer Kupplungsvorrichtung gemäß einer fünften Ausführungsform der Erfindung;
- Figuren 22 bis 28: Ansichten einer Kupplungsvorrichtung gemäß einer sechsten Ausführungsform der Erfindung;
- Figuren 29 bis 31: Ansichten einer Kupplungsvorrichtung gemäß einer siebten Ausführungsform der Erfindung

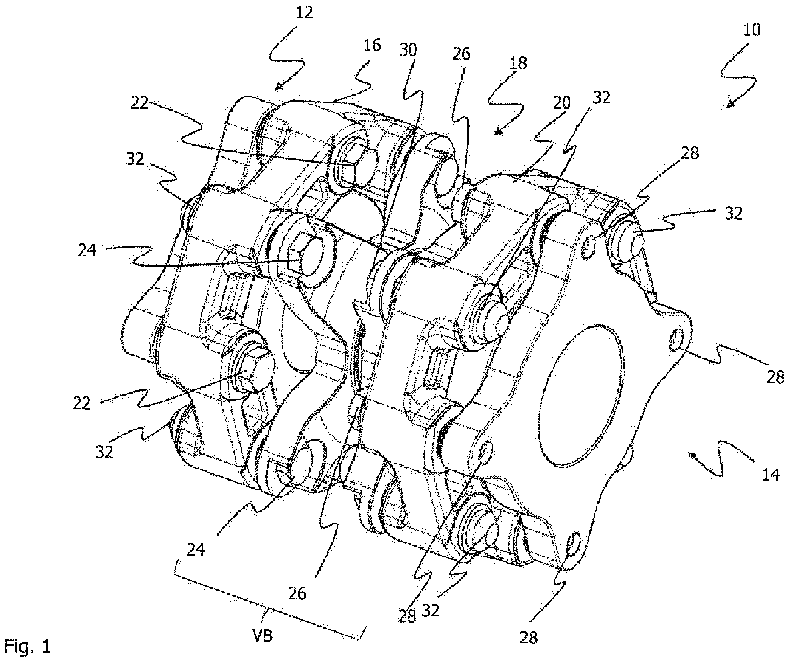

Fig. 1 zeigt eine perspektivische Ansicht der Kupplungsvorrichtung 10 gemäß einer Ausführungsform der Erfindung.

Die Kupplungsvorrichtung 10 umfasst einen ersten Flansch 12 und einen zweiten Flansch 14. Zwischen dem ersten Flansch 12 und dem zweiten Flansch 14 ist eine erste fadenverstärkte Gelenkvorrichtung 16, eine Verbindungsanordnung 18 und die zweiten fadenverstärkte Gelenkvorrichtung 20 vorgesehen.

Die erste fadenverstärkte Gelenkvorrichtung 16 ist über Befestigungsmittel in Form von Schrauben 22 mit dem ersten Flansch 12 verbunden. Zur Verbindung der ersten fadenverstärkten Gelenkvorrichtung 16 mit der Verbindungsanordnung 18 sind Befestigungsmittel in Form von Schrauben 24 vorgesehen.

Die zweite fadenverstärkte Gelenkvorrichtung 20 ist über Befestigungsmittel in Form von Schrauben 26 mit dem zweiten Flansch 14 verschraubt. Der zweite Flansch 14 weist Öffnungen 28 auf, in die als Befestigungsmittel wirkende Schrauben 26 eingeschraubt werden können. Die Verbindungsanordnung 18 ist über Befestigungsmittel in Form von Schrauben 30 mit der zweiten fadenverstärkten Gelenkvorrichtung 20 verschraubt.

An den fadenverstärkten Gelenkvorrichtungen 16 und 20 sind jeweils Sicherungsele-mente 32 erkennbar. Die Sicherungselemente 32 sind den Schrauben 24 bzw. 30 zugeordnet, die zur Verbindung der Verbindungsanordnung 18 mit den fadenverstärkten Gelenkvorrichtungen 16 und 20 dienen. Die Sicherungselemente 32 sollen dementsprechend verhindern, dass im Betrieb der Kupplungsvorrichtung 10 sich die fadenverstärkten Gelenkvorrichtungen 16 und 20 von den Schrauben 24 und 30 bzw. den diesen zugeordneten Kopplungselementen (in Fig. 1 nicht gezeigt) lösen können.

In Fig. 1 ist ferner erkennbar, dass die fadenverstärkten Gelenkvorrichtungen 16 und 20 zwischen sich einen Verbindungsbereich VB festlegen. Sämtliche der Schrauben 22, 24, 26, 30 können ausgehend von diesem Verbindungsbereich VB gelöst oder angezogen werden. Dies wird auch dadurch deutlich, dass die Schraubenköpfe der Schrauben 22, 24, 26, 30 in dem Verbindungsbereich VB angeordnet sind bzw. über den Verbindungsbereich VB zugänglich sind.

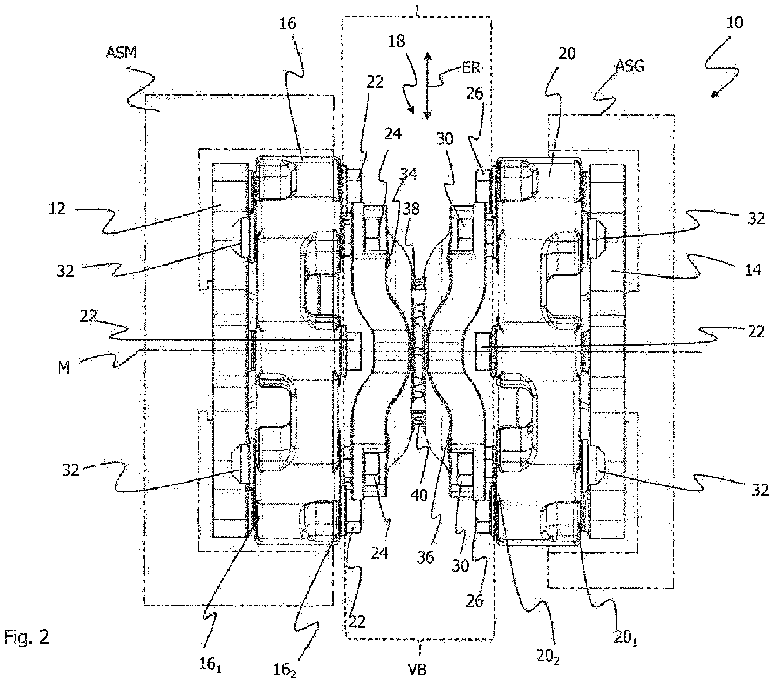

Fig. 2 zeigt eine Seitenansicht der Kupplungsvorrichtung 10 in einem beispielhaften Einbauzustand.

In Fig. 2 sind jeweils die Komponenten, die sich an die Kupplungsvorrichtung 10 anschließen, mit strichpunktierten Linien dargestellt. Das Anschlussstück ASM an den Motor befindet sich in Richtung der Achse M in Fig. 2 auf der linken Seite. Das Getriebeanschlussstück ASG ist in Fig. 2 in Richtung der Achse M rechts gezeigt.

In Fig. 2 sind der erste Flansch 12, die erste fadenverstärkte Gelenkvorrichtung 16, die Verbindungsanordnung 18 sowie die zweite fadenverstärkte Gelenkvorrichtung 20 und der zweite Flansch 14 erkennbar.

Die Verbindungsanordnung 18 weist ein erstes Teil 34 und ein zweites Teil 36 auf. Das erste Teil 34 weist in seinem zentralen Bereich eine Verzahnung 38 auf. In ähnlicher Weise weist das zweite Teil 36 eine Verzahnung 40 auf. Die Verzahnungen 38 und 40 der beiden Teile 34 und 36 der Verbindungsanordnung 18 greifen ineinander ein, um eine Drehmomentübertragung zwischen den beiden Teilen 34 und 36 zu ermöglichen.

Die erste fadenverstärkte Gelenkvorrichtung 16 ist über die Schrauben 22 mit dem ersten Flansch 12 verschraubt. Die zweite fadenverstärkte Gelenkvorrichtung 20 ist über die Schrauben 26 mit dem zweiten Flansch 14 verschraubt. Die Verbindungsanordnung 18 ist über die Schrauben 24 mit der ersten fadenverstärkten Gelenkvorrichtung 16 und über die Schrauben 30 mit der zweiten fadenverstärkten Gelenkvorrichtung 20 verschraubt. Die Schrauben 22, 24, 26 und 30 sind über den Verbindungsbereich VB zugänglich. Der Verbindungsbereich VB erstreckt sich in Richtung der Achse M zwischen der ersten fadenverstärkten Gelenkvorrichtung 16 und der zweiten fadenverstärkten Gelenkvorrichtung 20. Der Verbindungsbereich VB ist auch in radialer Richtung bzw. in Richtung des Pfeils ER zugänglich. Die Schraubenköpfe der Schrauben 22, 24, 26 und 30 befindet sich allesamt in dem Verbindungsbereich VB und können in diesem Verbindungsbereich VB angezogen und gelöst werden.

Anhand der Darstellung des Motoranschlussstücks ASM und des Getriebeanschlussstücks ASG wird erkennbar, dass der erste Flansch 12 und der zweite Flansch 14 nur sehr beschränkt zugänglich sind. Gleiches gilt für die dem ersten Flansch 12 zugewandte axiale Seite 16₁ der ersten fadenverstärkten Gelenkvorrichtung 16 und der dem zweiten Flansch 14 zugewandten axialen Seite 20₁ der zweiten fadenverstärkten Gelenkvorrichtung 20. Dementsprechend sind die Flansche 12 und 14 sowie die axialen Seiten 16₁ und 20₁ der fadenverstärkten Gelenkvorrichtungen 16 und 20 aufgrund des Motoranschlussstücks ASM und des Getriebeanschlussstücks ASG nicht erreichbar oder nicht zugänglich.

Nur die den Flanschen 12 und 14 abgewandten axialen Seiten 16₂ und 20₂ der fadenverstärkten Gelenkvorrichtungen 16 und 20 sind über den Verbindungsbereich VB zugänglich. Daraus wird deutlich, dass die Komponenten der Kupplungsvorrichtung 10 nur in radialer Richtung, d.h. in Richtung des Pfeils ER zugeführt und befestigt bzw. verbunden werden können. Eine Befestigung bzw. Verbindung der einzelnen Komponenten kann nur über den zwischen den beiden fadenverstärkten Gelenkvorrichtungen 16, 20 festgelegten Verbindungsbereich VB erfolgen. Der Verbindungsbereich VB wird über die dem ersten Flansch 12 abgewandte axiale Seite 16₂ der fadenverstärkten Gelenkvorrichtung 16 und der dem zweiten Flansch 14 abgewandten Seite 20₂ der zweiten fadenverstärkten Gelenkvorrichtung 20 festgelegt.

Die Flansche 12 und 14 werden mit dem Motoranschlussstück ASM und dem Getriebeanschlussstück ASG verbunden. Im Anschluss daran wird die erste fadenverstärkte Gelenkvorrichtung 16 in Richtung des Pfeils ER eingeführt und über den Verbindungsbereich VB mittels der Schrauben 22 mit dem ersten Flansch 12 verbunden. Gleiches gilt für die zweite fadenverstärkte Gelenkvorrichtung 20, die ebenfalls in Richtung des Pfeils ER zugeführt und über den Verbindungsbereich VB mit den Schrauben 26 mit dem zweiten Flansch 14 verbunden wird. Dann wird die Verbindungsanordnung 18 in Richtung des Pfeils ER, d.h. radial, zugeführt und über die Schrauben 24 mit der ersten fadenverstärkten Gelenkvorrichtung 16 und über die Schrauben 30 mit der zweiten fadenverstärkten Gelenkvorrichtung 20 verschraubt. Somit können sämtliche Komponenten der Kupplungsvorrichtung 10 radial in Richtung des Pfeils ER zugeführt und miteinander verbunden werden. Die fadenverstärkten Gelenkvorrichtungen 16 und 20 können über den Verbindungsbereich VB mit dem jeweiligen Flansch 12 oder 14 und der Verbindungsanordnung 18 verbunden werden.

An den axialen Seiten 16₁ und 20₁ der fadenverstärkten Gelenkvorrichtungen 16 und 20 erkennt man die Sicherungselemente 32, die verhindern sollen, dass im Betrieb der Kupplungsvorrichtung 10 die fadenverstärkten Gelenkvorrichtungen 16, 20 von den Schrauben 24, 30 bzw. den diesen Schrauben zugeordneten Kopplungselementen (nicht gezeigt) abgezogen werden. Die Sicherungselemente 32 werden bereits bei der Herstellung der fadenverstärkten Gelenkvorrichtung 16, 20 angebracht und können dann nicht mehr gelöst werden.

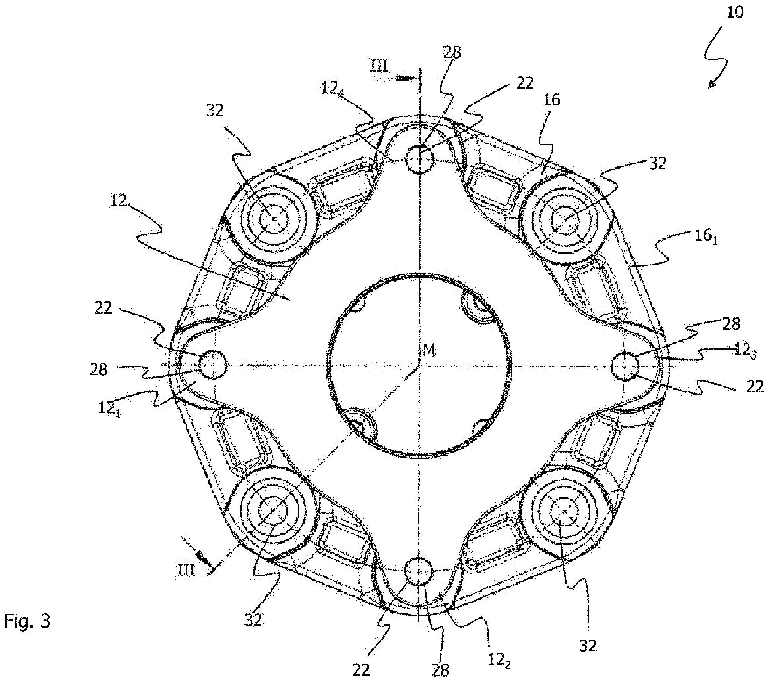

Fig. 3 zeigt eine Vorderansicht der Kupplungsvorrichtung 10.

In Fig. 3 ist der erste Flansch 12 sowie die erste fadenverstärkte Gelenkvorrichtung 16 gezeigt.

Der erste Flansch 12 umfasst vier Befestigungsvorsprünge 12₁ bis 12₄. In diesen Befestigungsvorsprüngen 12₁ bis 12₄ sind Öffnungen 28 ausgebildet, die Schrauben 22 aufnehmen können. Die Schrauben 22 dienen zur Verbindung der ersten fadenverstärkten Gelenkvorrichtung 16 mit dem ersten Flansch 12. An der axialen Seite 16₁ der fadenverstärkten Gelenkvorrichtung 16 sind wiederum die Sicherungselemente 32 erkennbar. Die Sicherungselemente 32 sind derart ausgebildet, dass sie nach einmaligem Anziehen nicht gelöst werden können. Beispielsweise können die Sicherungselemente 32 Sicherheitsschrauben, Einwegschrauben oder Abrissschrauben sein, deren schraubbare Köpfe bei einem vorbestimmten Drehmoment abreißen. Der zweite Flansch 14 (siehe Fig. 1) ist wie der erste Flansch 12 ausgebildet und wird in ähnlicher Weise mit der zweiten fadenverstärkten Gelenkvorrichtung 20 verbunden.

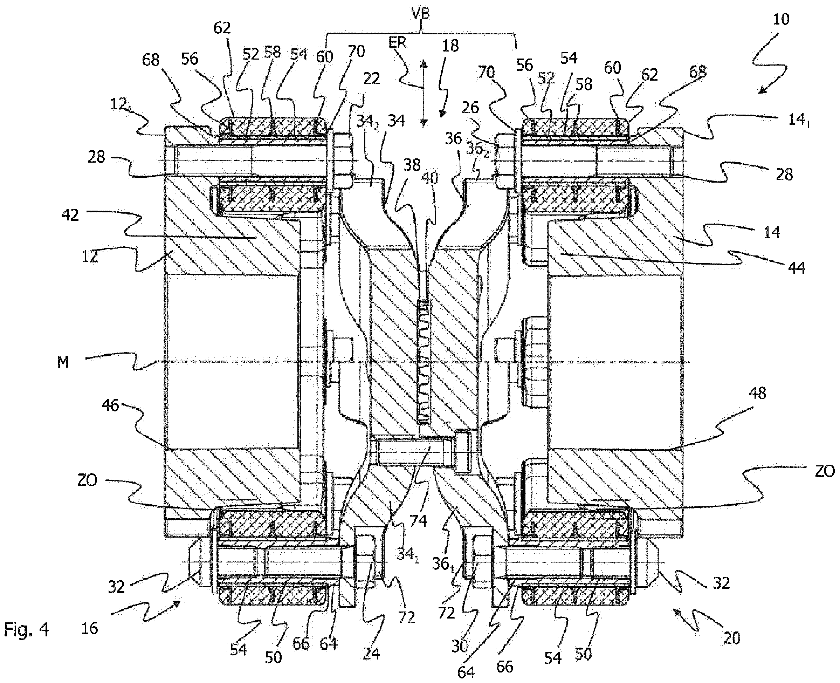

Fig. 4 zeigt eine Schnittansicht entlang der Schnittlinie III-III in Fig. 3.

Die Schnittansicht gemäß Fig. 4 zeigt den ersten Flansch 12, die erste fadenverstärkte Gelenkvorrichtung 16, die Verbindungsanordnung 18, die zweite fadenverstärkte Gelenkvorrichtung 20 und den zweiten Flansch 14.

Der erste Flansch 12 weist einen rohrförmigen Abschnitt 42 auf, der sich durch eine zentrale Öffnung ZO der ersten fadenverstärkten Gelenkvorrichtung 16 erstreckt. Der zweite Flansch 14 weist ebenfalls einen rohrförmigen Abschnitt 44 auf, der sich durch die zentrale Öffnung ZO der zweiten fadenverstärkten Gelenkvorrichtung 20 erstreckt. Die Flansche 12 und 14 weisen ebenfalls eine zentrale Öffnung 46 und 48 auf, die beispielsweise zur Aufnahme eines Wellenabschnitts (nicht gezeigt) dienen können.

Die fadenverstärkten Gelenkvorrichtungen 16 und 20 weisen erste Kopplungselemente 50 und zweite Kopplungselemente 52 auf. Die ersten und zweiten Kopplungselemente 50 und 52 sind jeweils in Außenbuchsen 54 aufgenommen. An den Außenbuchsen 54 sind jeweils Bundelemente 56, 58 und 60 vorgesehen. Die Bundelemente 56, 58 und 60 bilden eine Stützeinrichtung zur Abstützung und axialen Führung der Fadenpakete (nicht gezeigt) der fadenverstärkten Gelenkvorrichtungen 16, 20. Die beiden in axialer Richtung äußeren Bundelemente 56 und 60 sind L-förmige ausgebildet und weisen einen sich in radialer Richtung erstreckenden Abschnitt und einen Rohrabschnitt auf. Der Rohrabschnitt liegt an den Außenbuchsen 54 an. Das zwischen den beiden axial äußeren Bundelementen 56 und 60 angeordnete Bundelement 58 ist scheibenförmig ausgebildet und weist einen verdickten Abschnitt auf, mit dem das Bundelement 58 an der Außenbuchse 54 befestigt ist. Die Außenbuchsen 54 und die Bundelemente 56, 58 und 60 sind zumindest abschnittsweise in einen elastischen Körper 62 eingebettet.

Die ersten Kopplungselemente 50 sind rohrförmig ausgebildet und weisen ein Innengewinde auf. Ferner ist an den ersten Kopplungselementen 50 bzw. an einem axialen Endabschnitt 64 der Kopplungselemente 50 ein vorbestimmter Schraubenkopf vorgesehen. Der Schraubenkopf kann beispielsweise ein Sechskant sein. An dem Abschnitt 64 mit dem Schraubenkopf schließt sich ein radial umlaufender Vorsprung 66 an, der einen Abstützabschnitt für die Außenbuchsen 54 bildet.

Verglichen mit den ersten Kopplungselementen 50 sind die zweiten Kopplungselemente 52 ebenfalls rohrförmig ausgebildet, weisen jedoch kein Innengewinde und dergleichen auf. Durch die zweiten Kopplungselemente 52 erstrecken sich die Schrauben 22 und 26, die zur Verbindung der fadenverstärkten Gelenkvorrichtungen 16 und 20 mit dem jeweiligen Flansch 12 oder 14 dienen. In den Flanschen 12 und 14 sind Öffnungen 28 ausgebildet, die ein Innengewinde aufweisen. Die Öffnungen 28 sind in den Flanscharmen 12₁ und 14₁ der Flansche 12 und 14 ausgebildet, wobei in Fig. 4 nur die Flanscharme 12₁ und 14₁ gezeigt sind. Die Flanscharme 12₁ und 14₁ weisen ferner einen Abstützansatz 68 auf, an dem sich die zweiten Kopplungselemente 52 und die den zweiten Kopplungselementen 52 zugeordneten Außenbuchsen 54 abstützen können. Die fadenverstärkten Gelenkvorrichtungen 16 und 20 werden somit zwischen dem Abstützansatz 68 an den Flanscharmen 12₁ und 14₁ und den Schraubenköpfen der Schrauben 22, 26 bzw. den den Schraubenköpfen zugeordneten Beilagscheiben 70 geklemmt.

Die ersten Kopplungselemente 50 dienen zur Verbindung der fadenverstärkten Gelenkvorrichtungen 16 und 20 mit der Verbindungsanordnung 18. Wie bereits erwähnt, weisen die ersten Kopplungselemente 50 dazu ein Innengewinde auf, in das die Schrauben 24 und 30 eingeschraubt werden können. Die beiden Teile 34 und 36 der Verbindungsanordnung weisen jeweils vier Arme auf, von denen in Fig. 4 nur die Arme 34₁ und 34₂ bzw. 36₁ und 36₂ gezeigt sind. Wie in Fig. 4 erkennbar ist, weisen die Arme 34₁ und 36₁ eine Ausnehmung 72 auf, in der der Schraubenkopf der Schrauben 24 und 30 aufgenommen wird. Die Arme 34₁ und 36₁ legen sich an den Abschnitt 64 der ersten Kopplungselemente 50 an. Der Abschnitt 64 weist den vorbestimmten Schraubenkopf auf.

Zur Verbindung der Verbindungsanordnung 18 mit den fadenverstärkten Gelenkvorrichtungen 16 und 20 werden die Schrauben 24 und 30 in das Innengewinde der ersten Kopplungselemente 50 eingeschraubt. Während des Einschraubens der Schrauben 24 und 30 werden die ersten Kopplungselemente 50 über den Abschnitt 64 mit dem Schraubenkopf, an dem ein Schraubenschlüssel angesetzt wird, gegengehalten. Dadurch wird verhindert, dass das zum Schrauben benötigte Drehmoment über die Kopplungselemente 50 auf die Außenbuchsen 54 und den elastischen Körper 62 übertragen wird. Dadurch kann es möglicherweise Schäden an den fadenverstärkten Gelenkvorrichtungen 16 und 18 kommen.

An dem dem Abschnitt 64 entgegengesetzten Ende der ersten Kopplungselemente 50 sind die Sicherungselemente 32 in das Innengewinde der ersten Kopplungselemente 50 eingeschraubt. An den Sicherungselementen 32 sind ebenfalls Beilagscheiben 70 vorgesehen, an denen sich die ersten Kopplungselemente 50 und die Außenbuchsen 54 abstützen können. Die Sicherungselemente 32 verhindern, dass beim Anziehen der Schrauben 24 und 30 die ersten Kopplungselemente 50 aus den Außenbuchsen 54 herausgezogen werden. Zudem verhindern die Sicherungselemente 32, dass sich der elastische Gelenkkörper 16, 18 im Betrieb der Kupplungsvorrichtung 10 von den ersten Kopplungselementen 50 lösen kann.

Die Sicherungselemente 32 werden direkt bei der Herstellung der fadenverstärkten Gelenkvorrichtungen 16 und 20 mit den ersten Kopplungselementen 50 verbunden. Die Sicherungselemente 32 sind somit bereits an den fadenverstärkten Gelenkvorrichtungen 16 und 20 vorgesehen, wenn die fadenverstärkten Gelenkvorrichtungen 16 und 20 an dem jeweiligen Flansch 12 oder 14 befestigt werden.

Die beiden Teile 34 und 36 der Verbindungsanordnung sind neben den Verzahnungen 38 und 40 auch über Befestigungsmittel 74 miteinander verbunden. Die Befestigungsmittel 74 können Schrauben sein und erstrecken sich durch entsprechende Öffnungen in den beiden Teilen 34 und 36 der Verbindungsanordnung 18.

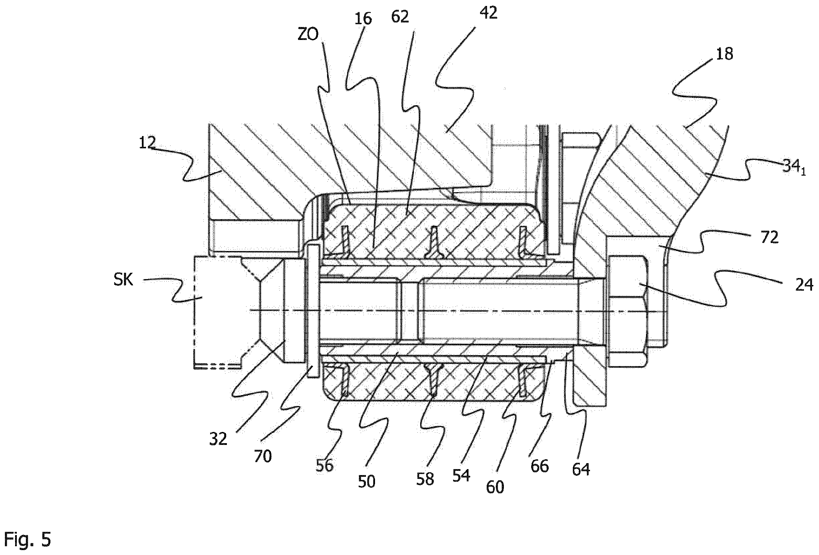

Fig. 5 zeigt eine vergrößerte Detailansicht aus der Schnittansicht gemäß Fig. 4.

In der Detailansicht gemäß Fig. 5 ist jeweils ein Abschnitt des ersten Flansches 12, der ersten fadenverstärkten Gelenkvorrichtung 16 und ein Abschnitt des Armes 34₁ des Teils 34 der Verbindungsanordnung 18 gezeigt. Der Arm 34₁ weist die Ausnehmung 72 auf, in der die Schraube 24 aufgenommen ist. Die Schraube 24 ist mit dem ersten Kopplungselement 50 bzw. dessen Innengewinde verschraubt. Der Arm 34₁ wird zwischen dem Abschnitt 64 mit dem vorbestimmten Schraubenkopf und dem Kopf der Schraube 24 geklemmt.

In das erste Kopplungselement 50 ist ferner das Sicherungselement 32 eingeschraubt, bei dem es sich um eine Abrissschraube handeln kann. In Fig. 5 ist der schraubbare Kopf SK strichpunktiert dargestellt. Das Sicherungselement 32 wird in das Innengewinde des ersten Kopplungselements 50 eingeschraubt und bei einem bestimmten Drehmoment reißt der schraubbare Kopf SK vom Rest des Sicherungselements 32 ab. Nach dem Abriss des schraubbaren Kopfes SK kann das Sicherungselement 32 nicht mehr oder nur noch mit sehr großem Aufwand gelöst werden. Durch das derart ausgebildete Sicherungselement 32 soll verhindert werden, dass das Sicherungselement 32 fälschlicherweise bzw. unbeabsichtigt gelöst wird. Zwischen der an dem Sicherungselement 32 angeordneten Beilagscheibe 70 und einem radialen Abstützvorsprung 66 des ersten Kopplungselements 55 wird die Außenbuchse 54 geklemmt. An der Außenbuchse 54 sind die Bundelemente 56, 58 und 60 vorgesehen, die eine Stützeinrichtung für die in Fig. 5 nicht gezeigten Fadenpakete bilden. Die axial äußeren Bundelemente 56 und 60 sind L-förmig ausgebildet und weisen einen Rohrabschnitt auf, der an der Außenbuchse 54 anliegt und mit einem radialen Abschnitt verbunden ist. Die Bundelemente 58 sind scheibenförmig ausgebildet und liegen mit ihrem verdickten radial inneren Ende an den Außenbuchsen 54 an.

Der Rohrabschnitt 42 des ersten Flansches 12 erstreckt sich in eine zentrale Öffnung ZO der fadenverstärkten Gelenkvorrichtung 16 hinein.

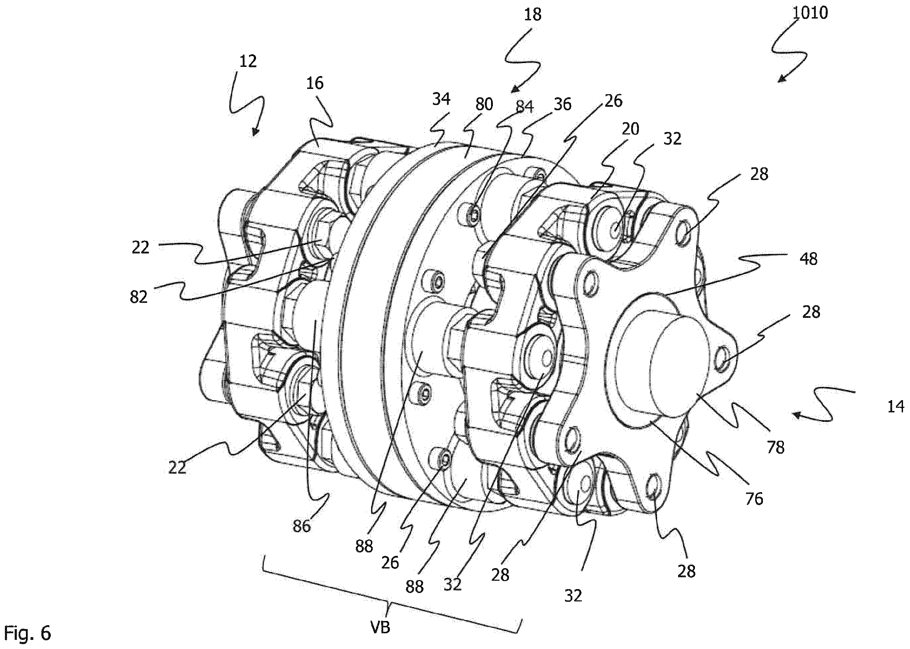

Fig. 6 zeigt eine perspektivische Ansicht einer Kupplungsvorrichtung 1010 gemäß einer zweiten Ausführungsform der Erfindung.

Die Kupplungsvorrichtung 1010 umfasst einen ersten Flansch 12, einen zweiten Flansch 14, eine erste fadenverstärkte Gelenkvorrichtung 16, eine Verbindungsanordnung 18 und eine zweite fadenverstärkte Gelenkvorrichtung 20.

Der zweite Flansch 14 weist eine zentrale Öffnung 48 auf. In dieser zentralen Öffnung 48 ist ein Anschlussstück 76 aufgenommen. Das Anschlussstück 76 ist an einer Welle 78 angeformt, die eine Motorausgangswelle oder eine Getriebeeingangswelle sein kann. Das Anschlussstück 76 bildet somit einen Abschnitt entweder der Motorausgangswelle oder der Getriebeeingangswelle. Bei diesem Ausführungsbeispiel ist die Welle 78 die Getriebeeingangswelle.

Die erste fadenverstärkte Gelenkvorrichtung 16 ist über Befestigungsmittel in Form von Schrauben 22 mit dem ersten Flansch 12 verbunden. Die zweite fadenverstärkte Gelenkvorrichtung 20 ist über Befestigungsmittel in Form von Schrauben 26 mit dem zweiten Flansch 14 verschraubt. Der zweite Flansch 14 weist Öffnungen 28 auf, in die sich die Schrauben 26 hinein erstrecken. An den fadenverstärkten Gelenkvorrichtungen 16 und 20 sind Sicherungselemente 32 vorgesehen.

Die Verbindungsanordnung 18 weist ein erstes Teil 34 und ein zweites Teil 36 auf. Das erste Teil 34 ist der ersten fadenverstärkten Gelenkvorrichtung 16 zugeordnet. Das zweite Teil 36 ist der zweiten fadenverstärkten Gelenkvorrichtung 20 zugeordnet. Zwischen dem ersten Teil 34 und dem zweiten Teil 36 ist ein Zwischenteil 80 vorgesehen. Das erste Teil 34 ist über die Schrauben 82 verbunden. Das zweite Teil 36 ist über die Schrauben 84 mit dem Zwischenteil 80 verschraubt. Die Schrauben 82 und 84 erstrecken sich in axialer Richtung in das Zwischenteil 80 hinein.

Das erste Teil 34 weist Vorsprünge 86 auf, die sich in Richtung der ersten fadenverstärkten Gelenkvorrichtung 16 erstrecken. Das zweite Teil 36 weist in gleicher Weise Vorsprünge 88 auf, die sich in Richtung der zweiten fadenverstärkten Gelenkvorrichtung 20 erstrecken. Durch die Vorsprünge 86 und 88 erstrecken sich in Fig. 6 nicht gezeigte Befestigungsmittel zur Verbindung der Teile 34 und 36 mit der jeweiligen fadenverstärkten Gelenkvorrichtung 16, 20.

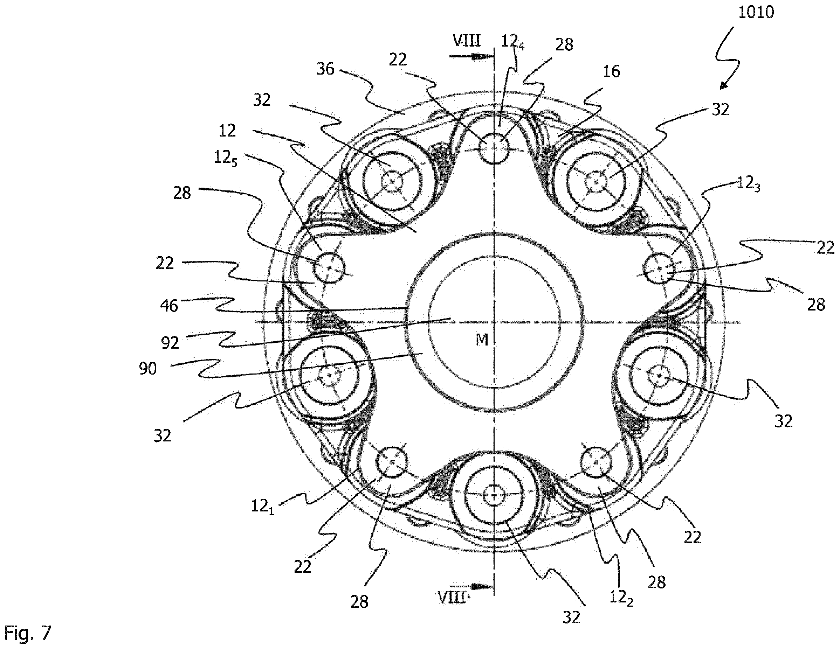

Fig. 7 zeigt eine Vorderansicht der Kupplungsvorrichtung 1010, in der der erste Flansch 12, die erste fadenverstärkte Gelenkvorrichtung 16 und das erste Teil 34 erkennbar ist. Der erste Flansch 12 umfasst fünf Befestigungsvorsprünge 12₁ bis 12₅. In den Befestigungsvorsprüngen 12₁ bis 12₅ sind die Öffnungen 28 ausgebildet, in die die Schrauben 22 eingeschraubt sind. Die Schrauben 22 verbinden die erste fadenverstärkte Gelenkvorrichtung 16 mit dem Flansch 12. An der fadenverstärkten Gelenkvorrichtung 16 sind die Sicherungselemente 32 erkennbar. In der zentralen Öffnung 46 des ersten Flansches 12 ist ebenfalls ein Anschlussstück 90 aufgenommen. Das Anschlussstück 90 ist an einer Welle 92 angeformt, die die Motorausgangswelle oder die Getriebeeingangswelle sein kann. Die Welle 92 ist gemäß diesem Ausführungsbeispiel die Motorausgangswelle.

Auch wenn sich die Anschlussstücke 76 und 90 bei einzelnen Ausführungsformen unterschiedlich dargestellt sind, sind die Anschlusstücke 76 und 90 sind bei sämtlichen Ausführungsformen Teil der Wellen 78 oder 92.

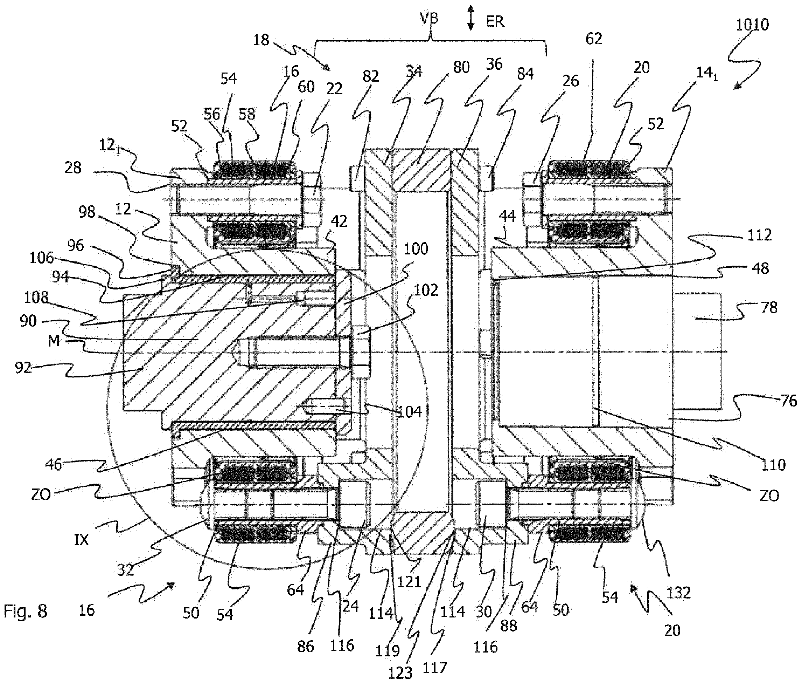

Fig. 8 zeigt eine Schnittansicht der Kupplungsvorrichtung entlang der Schnittlinie VIII-VIII in Fig. 7.

Der erste Flansch 12 und der zweite Flansch 14 weisen jeweils einen rohrförmigen Abschnitt 42, 44 auf, der sich jeweils durch eine zentrale Öffnung ZO der fadenverstärkten Gelenkvorrichtungen 16 und 20 erstreckt. Durch die rohrförmigen Abschnitte 42 und 44 erstreckt sich die zentrale Öffnung 46 und 48. In der zentralen Öffnung 46 und 48 sind 76 und 90 aufgenommen. Zwischen der Öffnung 46 in dem ersten Flansch 12 und dem Anschlussstück 90 ist eine Buchse 94 vorgesehen. Die Buchse 94 weist einen Kragen 96 auf, der in einer Ausnehmung 98 an der der fadenverstärkten Gelenkvorrichtung 16 abgewandten Seite des Flanschs 12 aufgenommen ist. Mit ihrem dem Kragen 96 entgegengesetzten Ende legt sich die Buchse 94 an ein sich radial erstreckendes Sicherungsmittel 100 an. Das Sicherungsmitte/100 kann scheibenförmig oder ringförmig ausgebildet sein. Das Sicherungsmitte/100 ist über die Schraube 102 mit dem Anschlussstück 90 verschraubt. Das Anschlussstück 90 weist eine Öffnung auf, in der ein Positionierstift 104 aufgenommen ist. Der Positionierstift 104 erstreckt sich zumindest abschnittsweise in eine Öffnung in dem Sicherungsmittel 100. Der Positionierstift 104 dient dazu, eine Relativverdrehung zwischen dem Sicherungsmittel 100 und dem Anschlussstück 94 zu verhindern. Zudem dient der Positionierstift 104 zur Positionierung bzw. Ausrichtung des Sicherungsmittels 100, um beispielsweise Unwuchten verhindern zu können.

Das Anschlussstück 90 weist einen sich in radialer Richtung erstreckenden Vorsprung 106 auf, der sich an den Kragen 96 der Buchse 94 anlegt. Der radiale Vorsprung 106 dient zur Sicherung der Buchse 96 in axialer Richtung. An den radialen Vorsprung 106 schließt sich in axialer Richtung eine Ausnehmung 107, die den Übergang des Anschlussstücks 90 auf die Welle 92 angibt. Das Anschlussstück 90 weist eine Bohrung bzw. Öffnung 108 auf, an der ein Öldruck angelegt werden kann. Über den an der Bohrung 108 angelegten Öldruck kann die Buchse 94 mit dem ersten Flansch 12 von dem Anschlussstück 90 abgepresst werden, nachdem das Sicherungsmittel 100 von dem Anschlussstück 90 abgenommen wurde.

Das Anschlussstück 76 ist in Fig. 8 im ungeschnittenen Zustand dargestellt. Das Anschlussstück 76 weist nicht gezeigte Bohrungen auf, die der Bohrung 108 des Anschlussstücks 90 entsprechen. Diese Bohrungen des Anschlussstücks 76 wirken mit der Nut 110 am Außenumfang des Anschlussstücks 76 zusammen und dienen zum Abpressen des Flansches 14 von dem Anschlussstück 76. Der Flansch 14 weist am in axialer Richtung inneren Ende der zentralen Öffnung 48 einen nach radial innen weisenden Vorsprung 112 auf, der als Anschlag beim Aufschieben des Flansches 14 auf das Anschlussstück 76 dient, um die korrekte Positionierung des Flansches 14 an dem Anschlussstück sicherzustellen..

Die fadenverstärkten Gelenkvorrichtungen 16 und 20 weisen erste Kopplungselemente 50 und zweite Kopplungselemente 52 auf, die in Außenbuchsen 54 aufgenommen sind. An den Außenbuchsen 54 sind jeweils Bundelemente 56, 58 und 60 vorgesehen. Die Bundelemente 58 und 60 sind integral mit der Außenbuchse 54 ausgebildet. Das Bundelement 56 ist auf die Außenbuchse 54 aufgepresst. Zwischen den Bundelementen 56, 58 und 60 sind in Fig. 8 Fadenpakete erkennbar, die die Kopplungselemente 50 und 52 und die daran angebrachten Außenbuchsen 54 miteinander verbinden.

Die ersten Kopplungselemente 50 sind rohrförmig ausgebildet und weisen ein Innengewinde auf. An den ersten Kopplungselementen 50 bzw. deren Endabschnitt 64 ist ein vorbestimmter Schraubenkopf vorgesehen, der beispielsweise ein Sechskant sein kann. Es ist jedoch auch jede andere Schraubenkopf bzw. Kontur denkbar. An dem Endabschnitt 64 legt sich der Vorsprung 86 des ersten Teils 34 der Verbindungsanordnung 18 an. Gleiches gilt für den Vorsprung 88 des zweiten Teils 34, der sich ebenfalls an den Endabschnitt 64 des ersten Kopplungselements 50 anlegt. Die Vorsprünge 86 und 88 weisen eine gestufte Öffnung 114 auf, in denen die Schrauben 24 und 30 mit ihrem Schraubenkopf aufgenommen sind. Der Schraubenkopf der Schrauben 24 und 30 legt sich an einen Absatz 116 in der Öffnung 114 an. Der Absatz 116 schnürt den Durchmesser der Öffnung 114 ein. Die Schraubenköpfe der Schrauben 24 und 30 können vollständig in den Öffnungen 114 in den Vorsprüngen 86 und 88 versenkt werden. Die Schrauben 24und 30 legen sich mit ihrem Schraubenkopf nach dem Anziehen der Schrauben 24 und 30 an den Absatz 116 an.

Zwischen dem ersten Teil 34 und dem zweiten Teil 36 der Verbindungsanordnung 18 ist das Zwischenteil 80 erkennbar. Das Zwischenteil 80 ist ringförmig ausgebildet und über die Schrauben 82 und 84 mit dem ersten Teil 34 und dem zweiten Teil 36 verbunden.

Die Demontage der Kupplungsvorrichtung 1010 läuft folgendermaßen ab:
Zunächst werden die Schrauben 84 und 86 gelöst, um das Zwischenstück 80 in Richtung des Doppelpfeils ER in radialer Richtung entnehmen zu können.

Nach der radialen Entnahme des Zwischenteils 80 werden die Schrauben 24 des ersten Teils 34 gelöst. Die Schrauben 24 werden dabei über den Abschnitt 64 mit beispielsweise einem Sechskantkopf gegengehalten. Es sind verschiedene andere Schraubenköpfe und Konturen denkbar, die zum Gegenhalten geeignet sind. Das erste Teil 34 kann dann axial nach innen und im Anschluss daran radial nach außen in Richtung des Doppelteils ER bewegt.

Dann werden die Schrauben 30 über den Abschnitt 64 mit beispielsweise einem Sechskantkopf gegengehalten und gelöst, das zweite Teil 36 nach axial innen in Richtung der ersten fadenverstärkten Gelenkvorrichtung 16 bewegt und das zweite Teil 36 in radialer Richtung entnommen.

Im Anschluss daran können nacheinander die Schrauben 22 oder 26 gelöst werden, um zunächst eine der fadenverstärkten Gelenkvorrichtungen 16 oder 20 und im Anschluss daran die weitere verbliebene fadenverstärkte Gelenkvorrichtung 16 oder 20 in axialer Richtung nach innen zu bewegen und in radialer Richtung zu entnehmen. Die fadenverstärkten Gelenkvorrichtungen 16 und 20 können in radialer Richtung entnommen werden, sobald die jeweilige fadenverstärkte Gelenkvorrichtung 16 oder 20 vollständig über das Ende des Rohrabschnitts 42 oder 44 bewegt wurde.

Die Montage erfolgt folgendermaßen:
Zunächst wird die fadenverstärkte Gelenkvorrichtung 16 radial eingesetzt und entlang des rohrförmigen Abschnitts 42 zu ihrer Befestigungsstelle bewegt. Dann wird die fadenverstärkte Gelenkvorrichtung 16 über die Schrauben 22 mit dem ersten Flansch 12 verschraubt. Dabei werden die Schrauben 22 über den Abschnitt 64 mit beispielsweise einem Sechskantkopf gegengehalten. In gleicher Weise wird die fadenverstärkte Gelenkvorrichtung 20 mit dem zweiten Flansch 14 nach ihrem radialen Einsetzen verbunden.

Das erste Teil 34 der Verbindungsanordnung 18 wird radial eingesetzt und in Anlage mit dem Endabschnitt 64 der Kopplungselemente 50 der fadenverstärkten Gelenkvorrichtung 16 gebracht. Dann wird das erste Teil 34 über die Schrauben 24 mit der fadenverstärkten Gelenkvorrichtung 16 verschraubt. Die Schrauben 24 werden über den Abschnitt 64 mit beispielsweise einem Sechskantkopf gekontert. In gleicher Weise wird das zweite Teil 34 in radialer Richtung eingesetzt und mit der fadenverstärkten Gelenkvorrichtung 20 verbunden.

In dem nun gebildeten axialen Freiraum zwischen dem den fadenverstärkten Gelenkvorrichtungen 16 und 18 abgewandten axialen Flächen der Teile 34 und 36 wird das Mittelteil 80 eingesetzt. Das Mittelteil 80 wird dann über die Schrauben 82 und 84 mit dem ersten Teil und dem zweiten Teil verbunden.

Wie insbesondere aus Fig. 8 und der voranstehenden Beschreibung der Demontage und der Montage der Kupplungsvorrichtung 1010 ersichtlich wird, können sämtliche Komponenten der Kupplungsvorrichtung im Verbindungsbereich bzw. aus dem Verbindungsbereich VB heraus miteinander verbunden oder voneinander gelöst werden.

In Fig. 8 sind an den axialen Flächen des Zwischenteils 80 Positioniermittel 117, 119, 121 ,123 vorgesehen. Die Positioniermittel werden von Vorsprüngen 117, 119 , die in axialer Richtung vorstehen, und Ausnehmungen 121, 123 gebildet, in die die Vorsprünge 117, 119 eingreifen. Die Vorsprünge 117 und 119 greifen in eine Ausnehmung 121 in dem ersten Teil 34 und eine Ausnehmung 123 in dem zweiten Teil 36 ein. Die Vorsprünge 117, 119 und die Ausnehmungen 121,123 dienen zur Positionierung des Mittelteils 80 beim radialen Einsetzen des Mittelteils 80 an dem ersten Teil 34 und dem zweiten Teil 36. Dadurch können Unwuchten aufgrund einer ungenauen bzw. falschen Positionierung des Mittelteils 80 verhindert bzw. verringert werden.

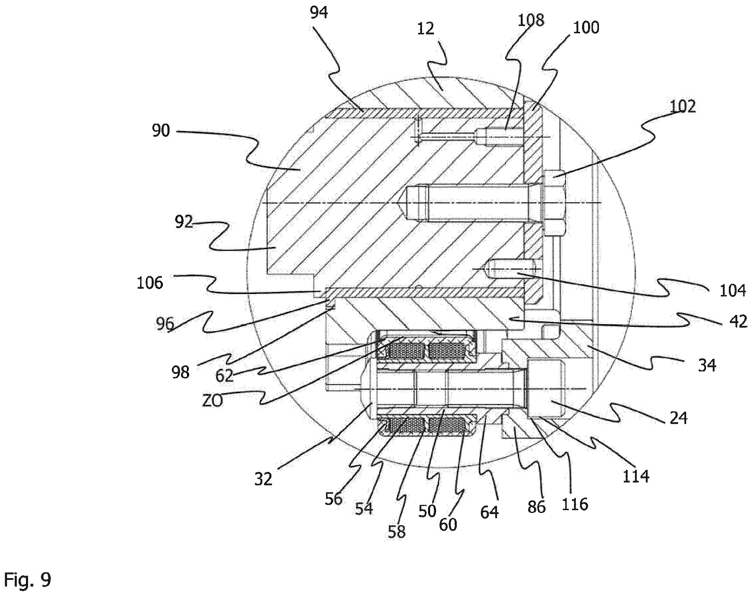

Fig. 9 zeigt eine Detailansicht des Details IX in Fig. 8.

In Fig. 9 ist der Vorsprung 86 an dem ersten Teil 34 erkennbar, der sich an den Endabschnitt 64 des ersten Kopplungselements 50 anlegt. Durch die Öffnung 114 des Vorsprungs 86 erstreckt sich die Schraube 24 zur Verbindung mit der fadenverstärkten Gelenkvorrichtung 16 bzw. zur Verbindung mit dem Innengewinde in dem ersten Kopplungselement 50.

Durch die zentrale Öffnung ZO der fadenverstärkten Gelenkvorrichtung 16 erstreckt sich der Rohrabschnitt 42 des ersten Flanschs 12. In der Öffnung 46 des ersten Flanschs 12 ist das Anschlussstück 90 aufgenommen. Zwischen dem Flansch 12 und dem Anschlussstück 90 ist die Buchse 94 vorgesehen, die als Rutschkupplung wirken kann. Der Flansch 12 ist über das Sicherungsmittel 100 an dem Anschlussstück 90 gesichert.

In Fig. 9 wird ferner deutlich erkennbar, dass die fadenverstärkte Gelenkvorrichtung 16 von einem Gelenkkörper mit einer einteiligen elastischen Ummantelung 62 gebildet wird, in der die Bundelemente 56, 58, 60 sowie das zweite Koppelelement 54 zumindest abstandsweise aufgenommen sind.

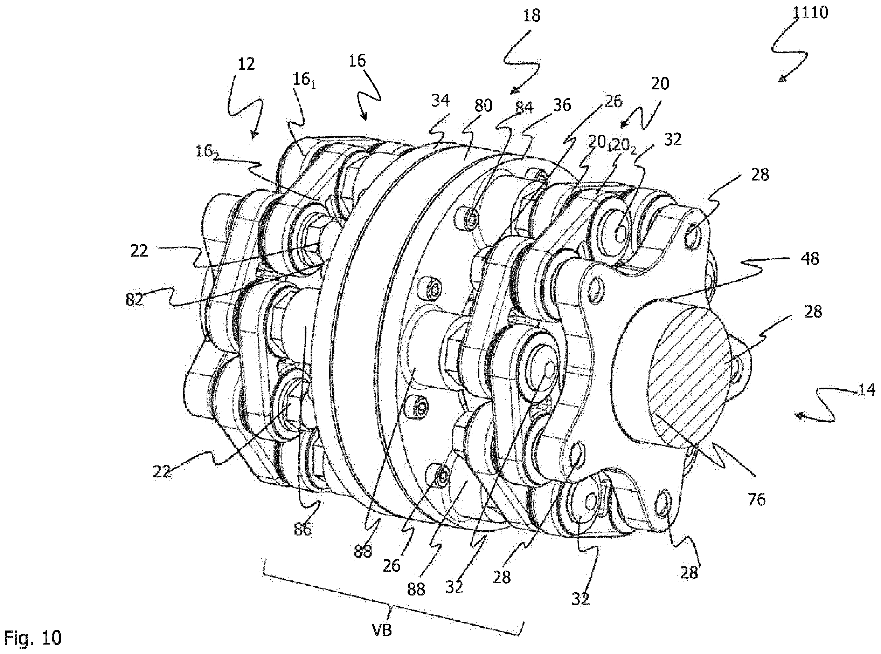

Fig. 10 zeigt eine perspektivische Ansicht einer Kupplungsvorrichtung 1110 gemäß einer dritten Ausführungsform der Erfindung.

Der wesentliche Unterschied zwischen der mit Bezug auf die Figuren 6 bis 9 beschriebenen zweiten Ausführungsform zu der in den Figuren 10 bis 13 gezeigten dritten Ausführungsform liegt in den fadenverstärkten Gelenkvorrichtungen 16 und 20.

Die fadenverstärkten Gelenkvorrichtungen 16 und 20 gemäß dieser Ausführungsform werden von einer Mehrzahl von Kupplungslaschen 16₁, 16₂ und 20₁ und 20₂ gebildet. Die Kupplungslaschen 16₁, 16₂ und 20₁ und 20₂ sind jeweils in axialer Richtung zueinander versetzt.

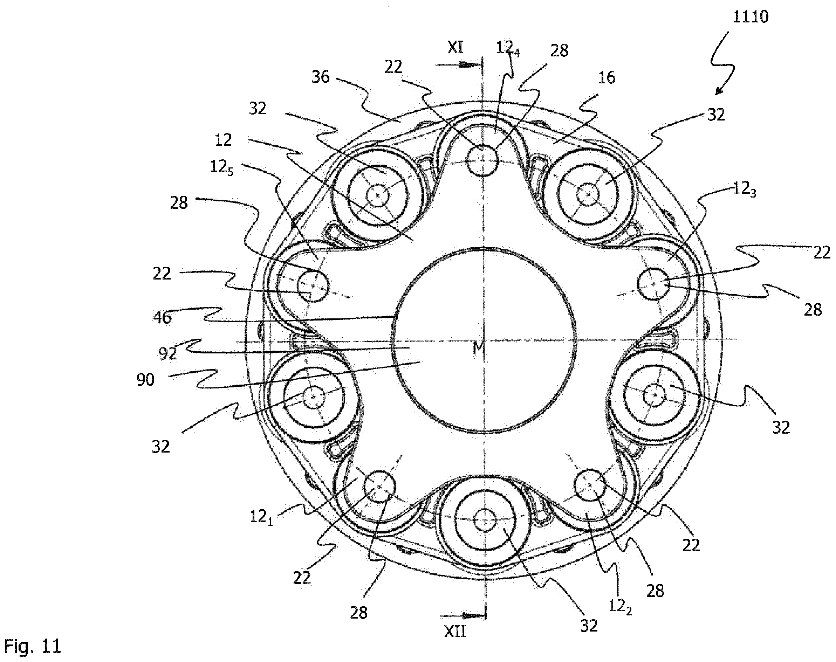

Fig. 11 zeigt eine Draufsicht der Kupplungsvorrichtung 1010.

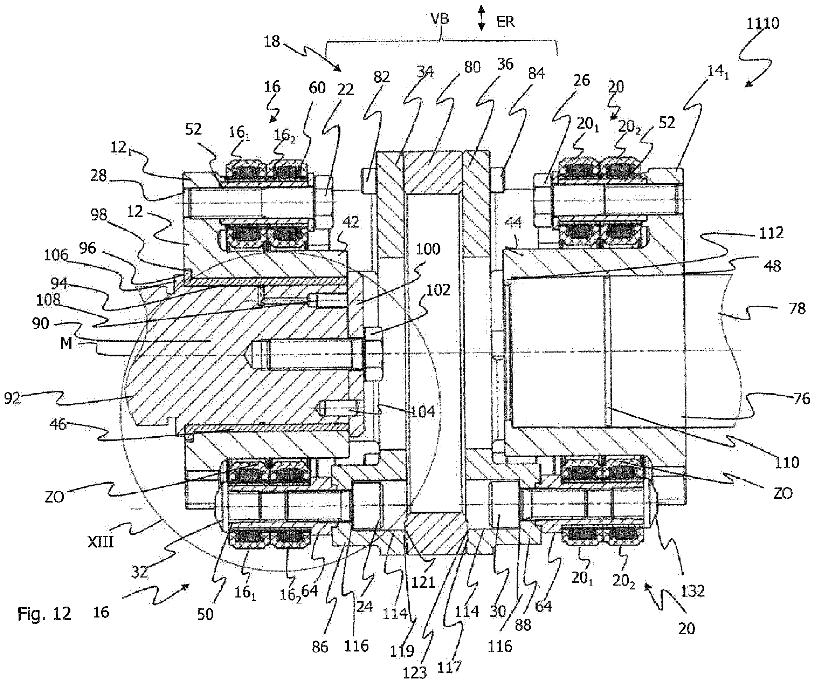

Fig. 12 zeigt eine Schnittansicht entlang der Schnittlinie XII-XII in Fig. 11.

In Fig. 12 sind die in axialer Richtung zueinander versetzt angeordneten Kupplungslaschen 16₁, 16₂ und 20₁, 20₂ erkennbar. Die Kupplungslaschen 16₁ und 16₂ sind mit einem ihrer Enden über die Schrauben 22 mit dem Flansch 12 verschraubt. Gleiches gilt für die Kupplungslaschen 20₁, 20₂, die über die Schraube 26 mit dem Flansch 14 verschraubt sind. Die Kupplungslaschen sind mit 16₁, 16₂ sind mit ihrem anderen Ende über die Schrauben 24 mit dem ersten Teil 34 verbunden. Die Kupplungslaschen 20₁ und 20₂ sind mit ihrem anderen Ende über die Schrauben 30 mit dem zweiten Teil 36 verbunden. Die Kopplungselemente 50, 52 werden in die Kupplungslaschen 16₁ und 16₂ eingepresst. Mit anderen Worten weisen die Kupplungslaschen 16₁, 16₂ und 20₁, 20₂ jeweils zwei Befestigungsstellen auf, von denen eine mit dem Flansch und die jeweils andere mit dem entsprechenden Teil 34 oder 36 verbunden wird.

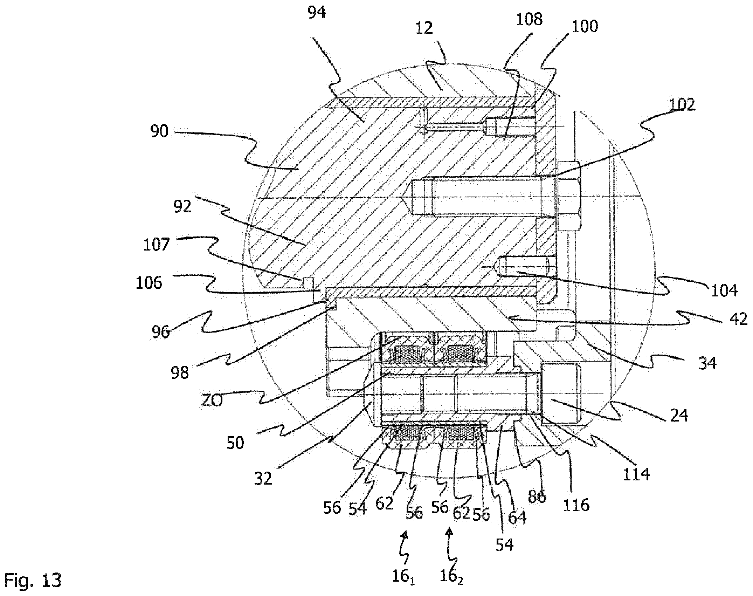

In Fig. 13 wird erkennbar, dass jede der Kupplungslaschen 16₁ und 16₂ einen elastischen Körper 62 aufweist, in den die Außenbuchsen 54, die Bundelemente 56 und das in axialer Richtung zwischen den beiden Bundelementen 56 angeordnete Fadenpaket zumindest abschnittsweise aufgenommen sind. Das Kopplungselement 50 wird in die Kupplungslaschen 16₁ und 16₂ eingepresst.

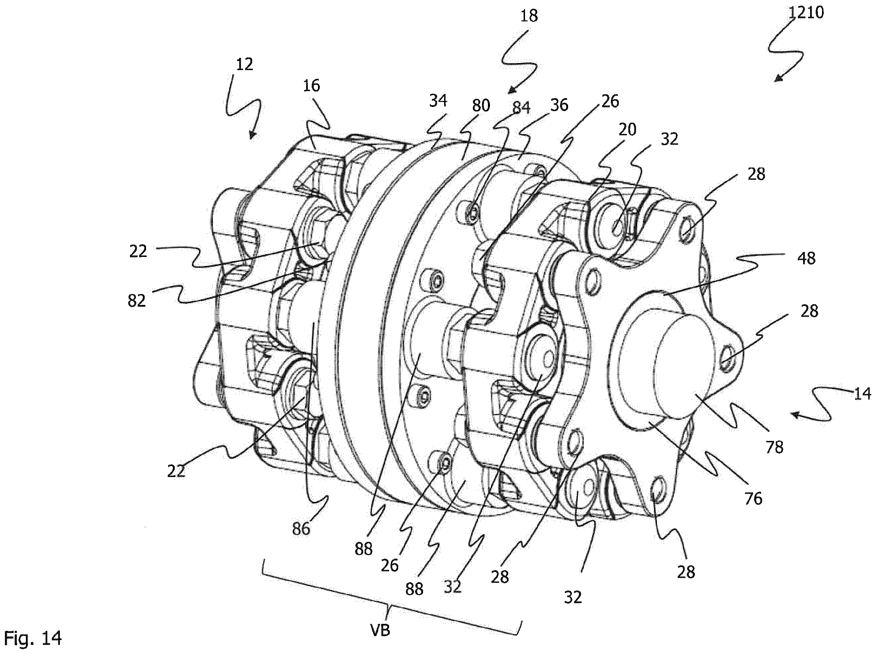

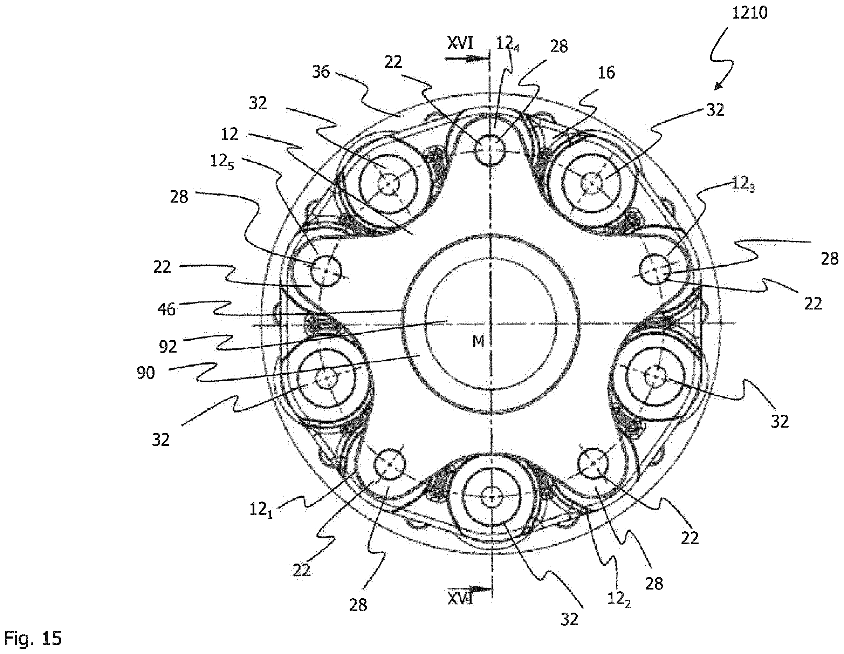

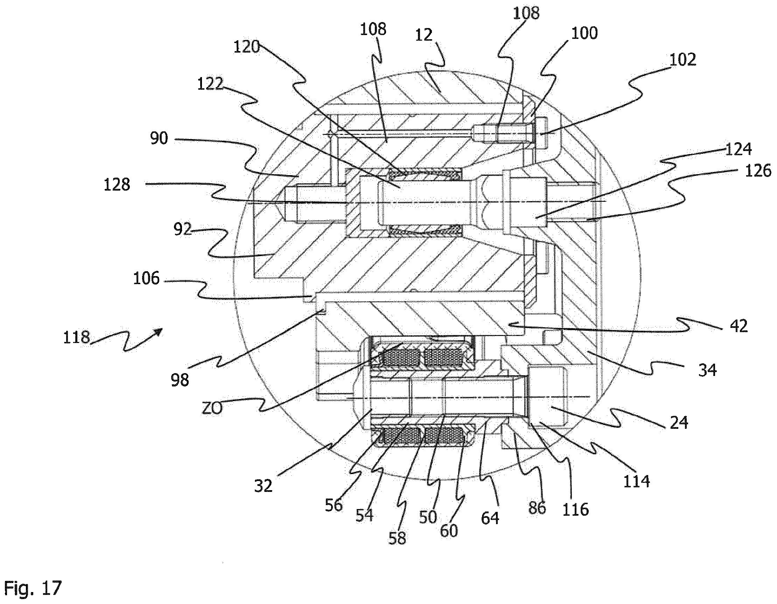

Die in den Figuren 14 bis 17 dargestellte vierte Ausführungsform entspricht weitestgehend der voranstehend mit Bezug auf die Figuren 6 bis 9 beschriebenen zweiten Ausführungsform.

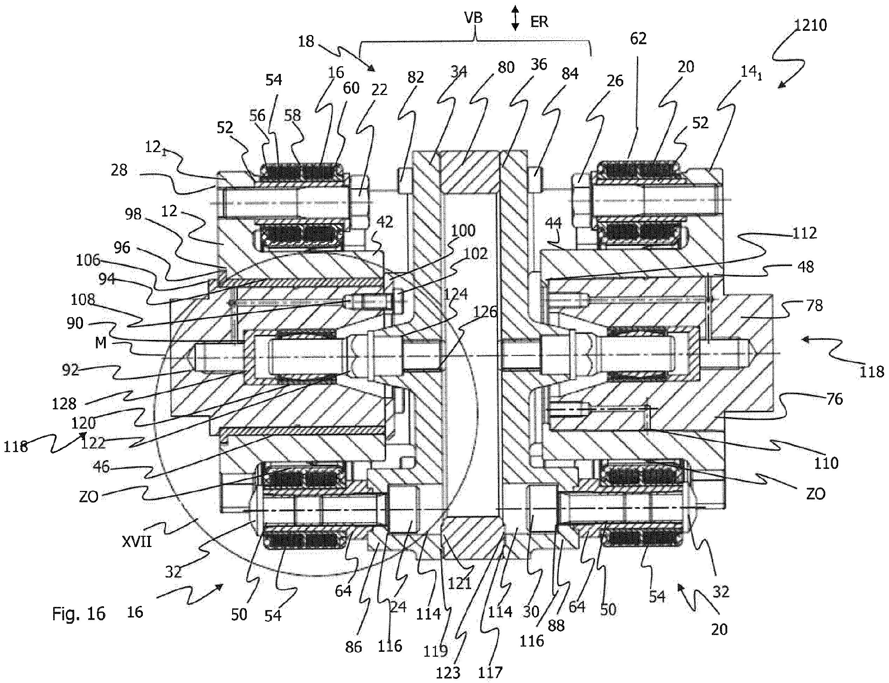

Der wesentliche Unterschied zwischen diesen beiden genannten Ausführungsformen wird in Fig. 16 deutlich. Die Kupplungsvorrichtung 1210 weist Zentrierungseinrichtungen 118 auf, die an den Anschlussstücken 90, 76 und den Teilen 34 und 36 der Verbindungsanordnung vorgesehen sind. Die Zentriereinrichtungen 118 weisen Zentrierhülsen 120 auf, die in dem Anschlussstück 90 und dem Anschlussstück 76 vorgesehen sind. Im Folgenden wird die Zentriereinrichtung 118 mit Bezug auf das Anschlussstück 90 und das erste Teil 34 beschrieben. Die Zentrierungseinrichtung 118 an dem zweiten Teil 36 und dem Anschlussstück 76 ist identisch ausgebildet.

Die Zentrierhülse 120 weist eine Innenbuchse und eine Außenbuchse auf, die über eine gummielastische Schicht miteinander verbunden sind. In der Innenbuchse der Zentrierhülse 120 ist ein Zentrierbolzen 122 aufgenommen, der mit dem ersten Teil 34 verbunden ist. Der Zentrierbolzen 122 weist einen Gewindeabschnitt 124 auf, der in eine Gewindeöffnung 126 an dem ersten Teil 34 eingeschraubt ist. Die Gewindeöffnung 126 an dem ersten Teil 34 erstreckt sich durch einen Vorsprung, der sich in Richtung des Anschlussstücks 90 erstreckt. An diesen Vorsprung legt sich der Zentrierbolzen 120 mit einem radial umlaufenden Vorsprung an. Ferner ist eine Auspresshülse 128 vorgesehen, an der über die Bohrung 108 ein Öldruck angelegt werden kann, der zum Auspressen der Zentrierhülse 120 aus dem Anschlussstück 90 dient. Die Zentrierhülse 120 kann mittels des auf die Auspresshülse 128 einwirkenden Öldrucks aus dem Anschlussstück 90 ausgepresst werden.

Der erste Flansch 12 ist über das Sicherungsmittel 100 zusammen mit der Buchse 94 an dem Anschlussstück 90 axial gesichert. Das Anschlussstück 90 ist über die Schraube 102 mit dem Sicherungsmittel 100 verschraubt.

Der Zentrierbolzen 122 ist in der Innenbuchse der Zentrierhülse 120 derart aufgenommen, dass der Zentrierbolzen 122 mit dem ersten Teil 34 bzw. mit der Verbindungsanordnung 18 relativ zu dem Anschlussstück 90 mit dem Flansch 12 in axialer Richtung verlagerbar und auch auslenkbar, d.h. zum Ausgleich von Winkelversätzen, aufgenommen ist.

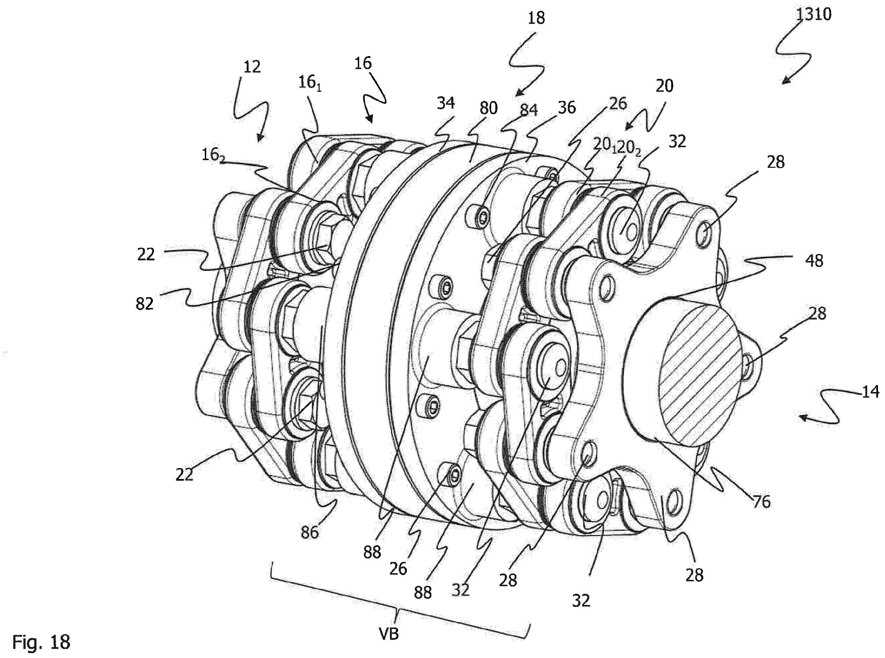

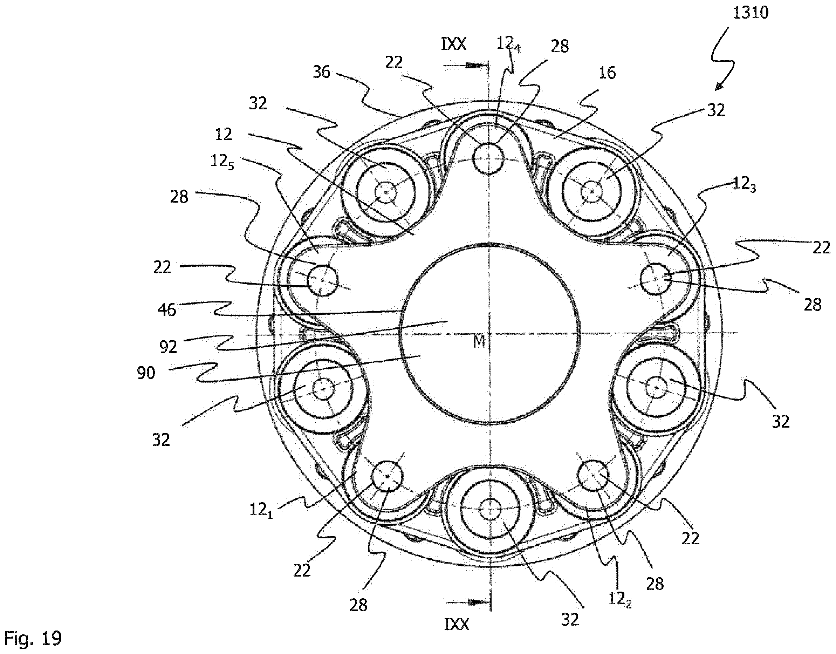

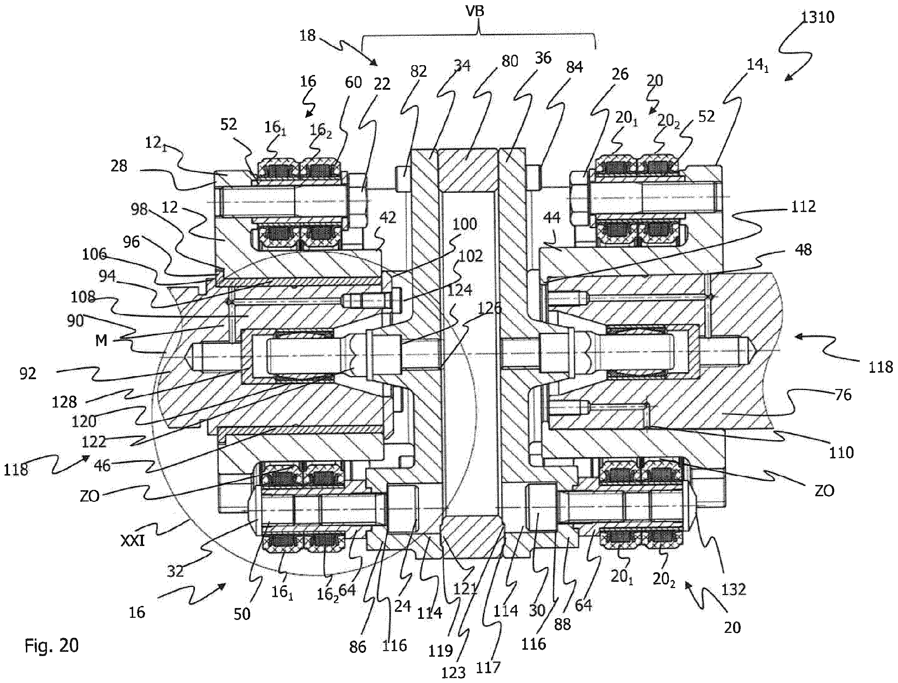

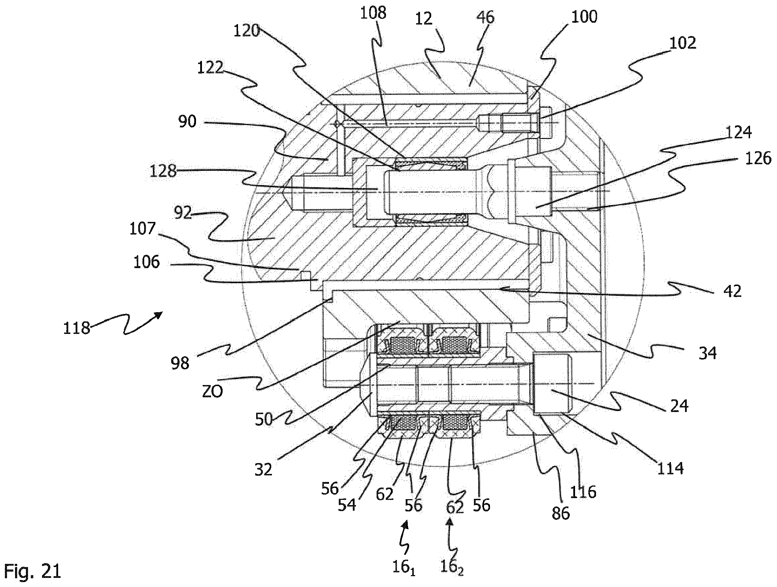

Die in den Figuren 18 bis 21 gezeigte fünfte Ausführungsform stellt eine Kombination der voranstehend beschriebenen dritten und vierten Ausführungsform dar.
Gemäß dieser Ausführungsform werden die fadenverstärkten Gelenkvorrichtungen 16 und 20 von einzelnen Kupplungslaschen 16₁, 16₂ und 20₁, 20₂ gebildet.

Die Kupplungsvorrichtung 1310 weist Zentriereinrichtungen 118 auf, die mit Bezug auf die voranstehend beschriebene vierte Ausführungsform im Detail beschrieben wurden. Um Wiederholungen zu vermeiden, wird auf weitere detaillierte Ausführungen bezüglich der Zentriereinrichtungen 118 an dieser Stelle verzichtet.

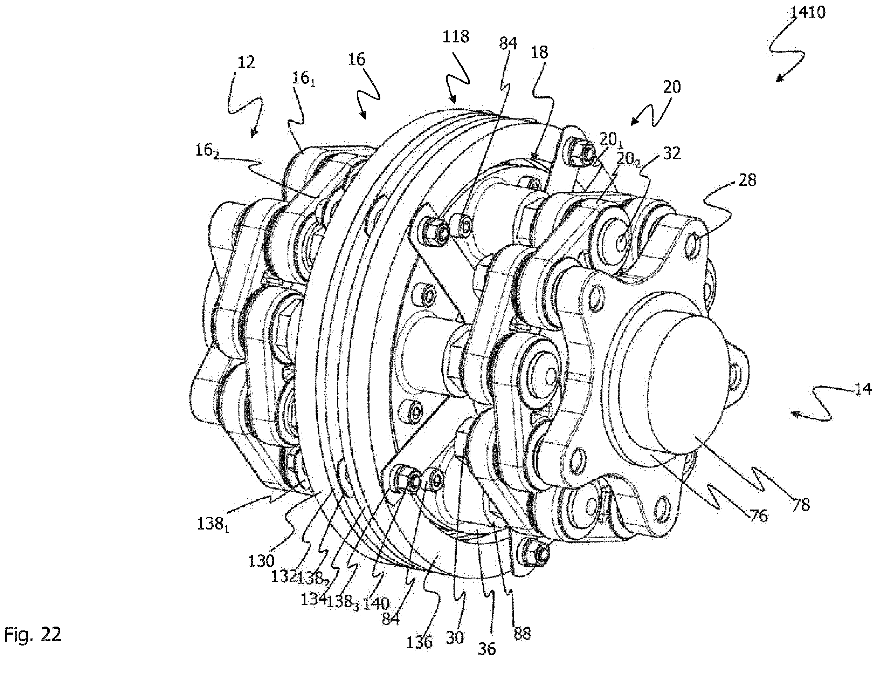

Fig. 22 zeigt eine perspektivische Ansicht einer Kupplungsvorrichtung 1410 gemäß einer sechsten Ausführungsform der Erfindung.

Die Kupplungsvorrichtung 1410 weist einen ersten Flansch 12, einen zweiten Flansch 14, eine erste fadenverstärkte Gelenkvorrichtung 16 und eine zweite fadenverstärkte Gelenkvorrichtung 20 auf. Die fadenverstärkten Gelenkvorrichtungen 16 und 20 sind über eine Verbindungsanordnung 18 miteinander verbunden. Die Verbindungsanordnung 18 ist gemäß dieser Ausführungsform mehrteilig ausgeführt. Von der Verbindungsanordnung 18 ist in Fig. 22 jedoch nur das Teil 36 erkennbar. Die einzelnen Teile der Verbindungsanordnung 18 sind beispielsweise über die Schrauben 84 miteinander verbunden. Das Teil 36 der Verbindungsanordnung 18 weist Vorsprünge 88 auf, die zur Kopplung mit der fadenverstärkten Gelenkvorrichtung 20 dienen.

Die Kupplungsvorrichtung 1410 weist zudem eine Zentriereinrichtung 118 auf. Die Zentriereinrichtung 118 weist vier ringförmige Elemente 130, 132, 134 und 136 auf. Neben den ringförmigen Elementen 130, 132, 134 und 136 weist die Zentriereinrichtung 118 drei Gelenkmembranen 138₁, 138₂ und 138₃ auf. Die ringförmigen Elemente 130, 132, 134 und 136 sowie die Gelenkmembranen 138 werden über Schrauben 140 miteinander verbunden. Die Gelenkmembranen 138₁, 138₂ und 138₃ erstrecken sich sternförmig zwischen den ringförmigen Elementen 130, 132, 134 und 136 und einem Anbindungspunkt in einem zentralen Bereich der Kupplungsvorrichtung 1410. Die ringförmigen Elemente 130, 132, 134 und 136 erstrecken sich radial außen um die Verbindungsanordnung 18 herum.

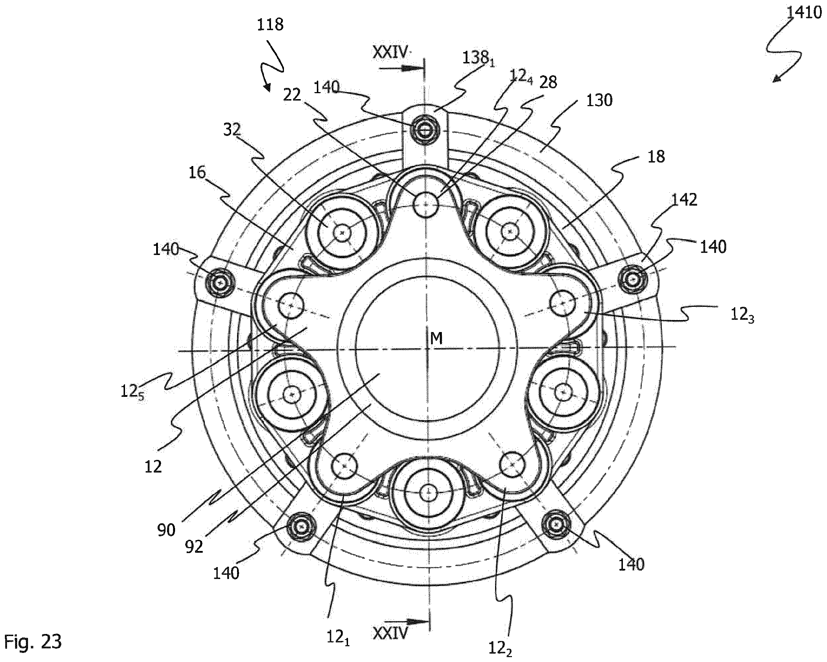

Fig. 23 zeigt eine Vorderansicht der Kupplungsvorrichtung 1410.

In Fig. 23 ist der Flansch 12 mit seinen fünf Flanscharmen 12₁ bis 12₅ erkennbar. Der Flansch 12 ist mit der fadenverstärkten Gelenkvorrichtung 16 verbunden. Die Zentriereinrichtung 118 erstreckt sich radial außen um die Verbindungsanordnung 18 herum, wie in Fig. 23 durch das ringförmige Element 130 erkennbar ist. Die Gelenkmembran 138₁ erstreckt sich aus einem Bereich nahe der Mittelachse M der Kupplungsvorrichtung 1410 nach radial außen zu den Verbindungspunkten mit den Schrauben 140. Die Gelenkmembran 138₁ weist fünf Arme oder Stege 142 auf, die jeweils über eine Schraube 140 mit den weiteren Elementen der Zentriereinrichtung 118 verbunden werden.

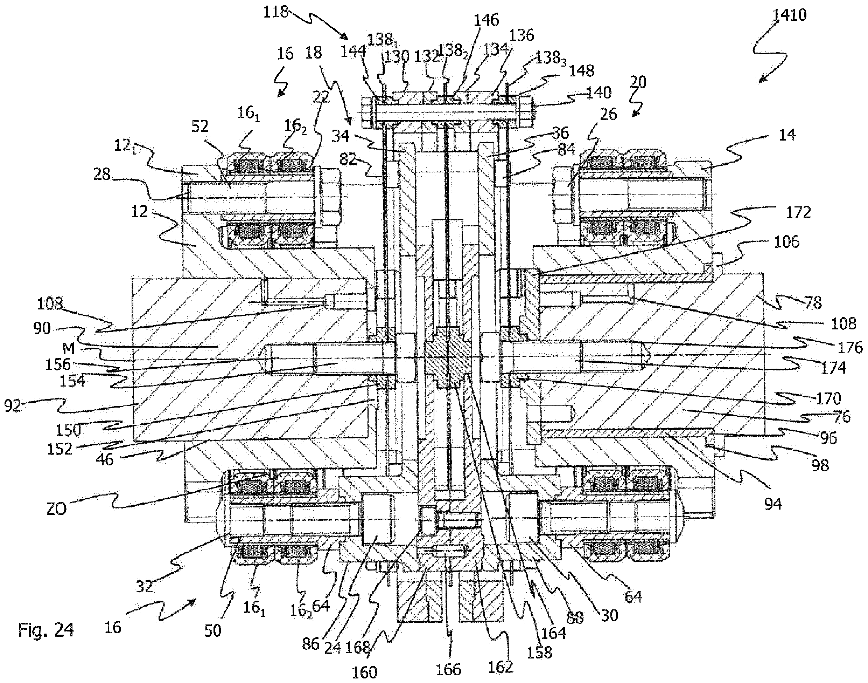

Fig. 24 zeigt eine Schnittansicht entlang der Schnittlinie XXIV in Fig. 23.

In Fig. 24 ist die Zentriereinrichtung 118 erkennbar, die sich mit ihren ringförmigen Elementen 130, 132, 134 und 136 radial außen um die Verbindungseinrichtung 18 herum erstreckt. Die Ringelemente 130, 132 und 134, 136 liegen paarweise aneinander an. Die Ringelemente 130, 132, 134, 136 sind über Koppelelemente 144, 146, 148 mit den Gelenkmembranen 138₁, 138₂ und 138₃ gekoppelt. Dazu weisen die Kopplungselemente 144, 146, 148 und die ringförmigen Elemente 130, 132, 134 und 136 jeweils in axialer Richtung ineinander eingreifende Vorsprünge bzw. Ausnehmungen auf. Diese Ausnehmungen und Vorsprünge sind in Figur 24 im oberen Bereich der Teile 130, 132, 134, 136 erkennbar, wurden jedoch aus Gründen der Übersichtlichkeit nicht mit Bezugszeichen versehen. Die Kopplungselemente 144, 146 und 148 sind an den Enden der Arme 142 der Membranen 138₁, 138₂ und 138₃ vorgesehen. Die Koppelelemente 144, 146, 148 und die ihnen zugeordneten Membranen 138₁, 138₂ und 138₃ sowie die ringförmigen Elemente 130, 132, 134 und 136 sind über Schrauben 140 miteinander verbunden. Die Schrauben 140 erstrecken sich durch sämtliche der genannten Elemente und können an einer Seite mit einer Mutter gekontert werden. Es ist jedoch auch denkbar, zwei Schrauben zur Verbindung der genannten Elemente zu verwenden.

Die Gelenkmembranen 138₁, 138₂, 138₃ erstrecken sich radial einwärts. Die Membran 138₁ ist über ein weiteres Kopplungselement 150 mit einem sich in axialer Richtung erstreckenden Abschnitt des Flansches 12 gekoppelt. Der axiale Abschnitt 152 des Flansches schließt die Öffnung 46 im Flansch 12 ab. Der Flansch 12 ist somit im Querschnitt topfförmig ausgebildet und kann das Anschlussstück 90 aufnehmen. Der axiale Abschnitt 152 des Flansches 12 dient ferner als Anschlag beim Aufpressen des Flansches 12 auf das Anschlussstück 90. Die Membran 138₁ ist über das Kopplungselement 150 und eine Schraube 154 mit dem Anschlussstück 90 gekoppelt. Dazu ist in dem Anschlussstück 90 eine Gewindeöffnung 156 ausgebildet.

Die Zentriereinrichtung 118 ist ferner über die Membran 138₂ und das Kopplungselement 158 mit der Verbindungsanordnung 18 gekoppelt. Neben den beiden axial äußeren Teilen 34 und 36 weist die Verbindungsanordnung 118 zwei axial innere Teile 160 und 162 auf. Die Teile 160, 162 weisen jeweils eine Öffnung 164 zur Aufnahme eines Vorsprungs an dem Kopplungselement 158 auf. Die beiden Teile 160 und 162 werden über einen Positionierstift 166 aneinander positioniert und über die Schraube 168 miteinander verbunden. Die beiden Teile 160 und 162 bilden zusammen mit der Membran 138₂ eine Baugruppe, die in radialer Richtung zwischen die beiden weiteren Teile 34 und 36 der Verbindungsanordnung 18 radial eingesetzt werden kann.

Die Zentriereinrichtung 118 ist zudem über die Membran 138₃ und das Koppelelement 170 mit einem Sicherungselement 172 gekoppelt. Das Kopplungselement 170 und das Sicherungselement 172 sind über eine Schraube 174 mit dem Anschlussstück 76 verschraubt. Dazu weist das Anschlussstück 76 eine Gewindeöffnung 176 auf. Das Sicherungselement 172 dient zum Sichern des Flansches 14 an dem Anschlussstück 76. Zwischen dem Flansch 14 und dem Anschlussstück 76 ist in radialer Richtung eine Buchse 94 vorgesehen. Die Buchse 94 kann als Rutschkupplung wirken. Sollte sich der Flansch 14 von der Außenumfangsfläche der Buchse 94 bei einer Überlast lösen, hält das Sicherungselement 172 und der sich in radialer Richtung erstreckende Vorsprung 106 an dem Anschlussstück 76 den Flansch 14 an dem Anschlussstück 76.

Die Montage der Kupplungsvorrichtung 1410 kann folgendermaßen erfolgen:
Die fadenverstärkte Gelenkvorrichtung 16 wird über die Schrauben 22 mit dem Flansch 12 verschraubt. Das erste Teil 34 der Verbindungsanordnung 18 wird über die Schrauben 24 mit der fadenverstärkten Gelenkvorrichtung 16 verschraubt. In ähnlicher Weise wird die fadenverstärkte Gelenkvorrichtung 20 mit dem ersten Flansch 14 über die Schrauben 26 verschraubt. Im Anschluss daran wird das zweite Teil 36 der Verbindungsanordnung 18 radial eingesetzt und über die Schrauben 30 mit der fadenverstärkten Gelenkvorrichtung 20 verschraubt.

Im Anschluss daran wird die Gelenkmembran 138₁ zusammen mit ihren Koppelelementen 144 und dem ihr zugeordneten Ringelement 130 an dem Anschlussstück 90 und dem Flansch 12 angeordnet und mit dem Anschlussstück 90 verschraubt. Daraufhin wird die Gelenkmembran 138₃ zusammen mit dem ihr zugeordneten Ringelement 136 radial eingesetzt und mit dem Anschlussstück 76 über die Schraube 174 verschraubt.

Wie bereits erwähnt, bilden die beiden axial inneren Teilen 160 und 162 der Verbindungsanordnung 18, die Gelenkmembran 138₂ sowie die dieses zugeordneten Ringelementen 132 und 134 eine Baugruppe. Diese Baugruppe wird vormontiert, wobei die Teile 160, 162 über den Positionierstift 166 aneinander positioniert und über die Schrauben 168 miteinander verbunden werden. Die Ringelemente 132 und 134 können ebenfalls im Voraus mit der Membran 138₂ verbunden werden. Diese Baugruppe kann nun in radialer Richtung eingesetzt werden. An den Teilen 34 und 36 sowie den Teilen 160, 162 der Verbindungsanordnung 18 sind in axialer Richtung ineinander eingreifende Vorsprünge und Ausnehmungen zur Positionierung der Teile 160, 162 an den Teilen 34 und 36 vorgesehen. In ähnlicher Weise sind an den Ringelementen 130, 132, 134 und 136 in axialer Richtung ineinander greifende Vorsprünge und Ausnehmungen zur Positionierung der Ringelemente 32, 34 an den Ringelementen 130 und 136 vorgesehen. Diese Ausnehmungen und Vorsprünge sind in Figur 24 im unteren Bereich der Teile 160, 162, 132, 134 erkennbar, wurden jedoch aus Gründen der Übersichtlichkeit nicht mit Bezugszeichen versehen. Es ist ebenfalls denkbar, dass die Membran 138₁ mit dem Koppelelement 144 und dem Ringelement 130 im Voraus verbunden wird. Gleiches gilt für die Membran 138₃, Koppelelement 148 und das Ringelement 136.

Im Anschluss an das radiale Einsetzen der Baugruppe werden die Teile 34, 36, 160 und 162 der Verbindungsanordnung 18 über die Schrauben 82 und 84 miteinander verschraubt. Die radial außerhalb der Verbindungsanordnung 18 liegenden Teile der Zentriereinrichtung 18 werden über die Schraube 140 miteinander verbunden.

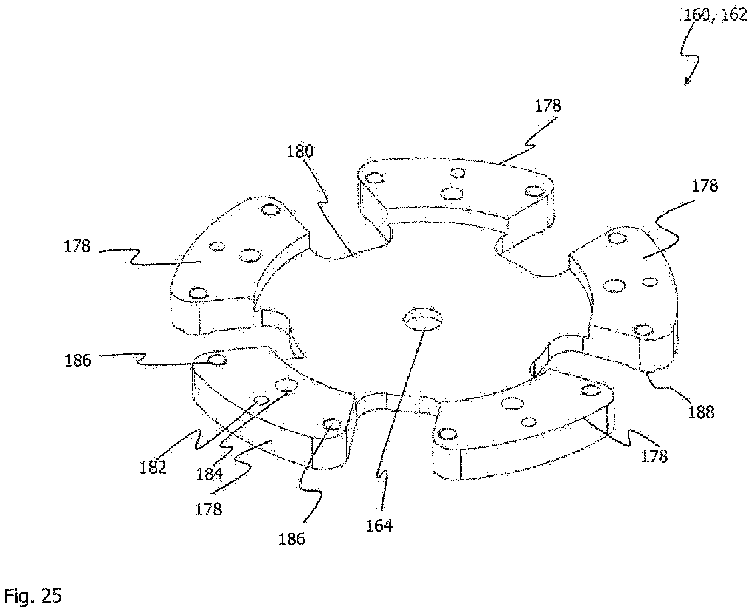

Fig. 25 zeigt eine perspektivische Einzelteildarstellung der Teile 160, 162 der Verbindungsanordnung 18. Die Teile 160, 162 sind im Wesentlichen scheibenförmig ausgebildet und weisen Befestigungsvorsprünge 178 auf. Zwischen den Vorsprüngen 178 sind Ausnehmungen 180 erkennbar, durch die sich im montierten Zustand die Arme der Gelenkmembranen erstrecken. Die Befestigungsvorsprünge 176 weisen jeweils eine Öffnung 182 zur Aufnahme des Positionierstifts 166 (Fig. 24) auf. Ferner ist in den Befestigungsvorsprüngen 178 eine Öffnung 184 ausgebildet, die zur Aufnahme der Verbindungsschraube 168 dient. Die Öffnungen 182 und 184 liegen auf einer gedachten radialen Linie.

Jeder der Befestigungsvorsprünge 178 weist weitere Öffnungen 186 auf, die zur Aufnahme der Schrauben 82 und 84 für die Verbindung der einzelnen Teile der Verbindungsanordnung 18 dienen.

Das Element 160, 162 weist ferner eine Öffnung 164 in seinem zentralen Bereich auf, die zur Aufnahme eines Vorsprungs des Koppelelements 158 der Gelenkmembran 138₂ dient. In Fig. 25 erkennt man ferner die axialen Vorsprünge 188, die zur Positionierung der Teile 160, 162 an den weiteren Teilen 34, 36 der Verbindungsanordnung 18 (siehe Fig. 24) dienen.

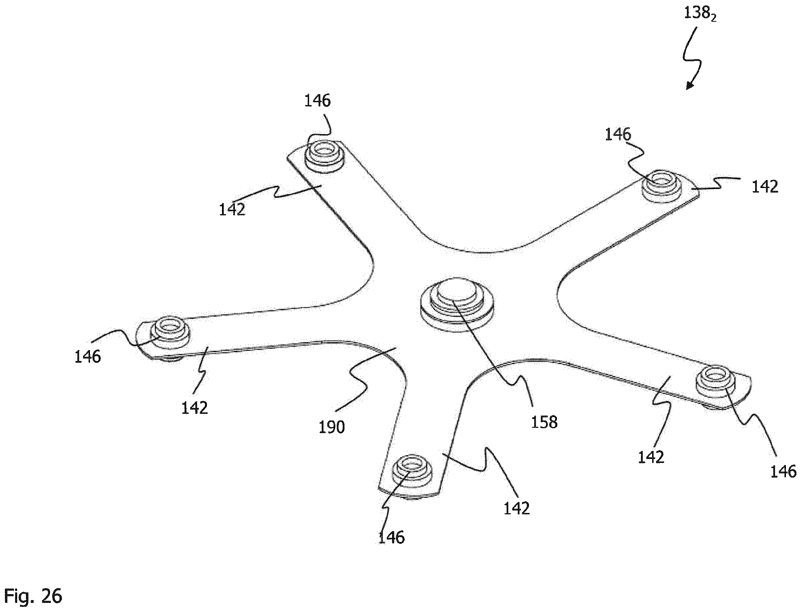

Fig. 26 zeigt eine perspektivische Ansicht der Gelenkmembran 138₂.

Die Gelenkmembran 138₂ weist Kopplungselemente 146 zur Kopplung mit den Ringelementen 132 und 134 (siehe Fig. 24) auf. Die Kopplungselemente 146 sind an den Armen 142 vorgesehen. Die Arme 142 erstrecken sich speichenförmig von dem zentralen Bereich 190 der Gelenkmembran 138₂ weg. In dem zentralen Bereich 190 ist das Kopplungselement 158 dargestellt, das zur Kopplung mit den Teilen 160, 162 der Verbindungsanordnung 18 dient. Die Gelenkmembran 138₂ ist in radialer Richtung steif, jedoch in axialer Richtung und auch was die Beugung angeht weich. Aufgrund ihrer radialen Steifigkeit kann die Gelenkmembran 138₂ zur radialen Abstützung der Verbindungsanordnung 18 dienen.

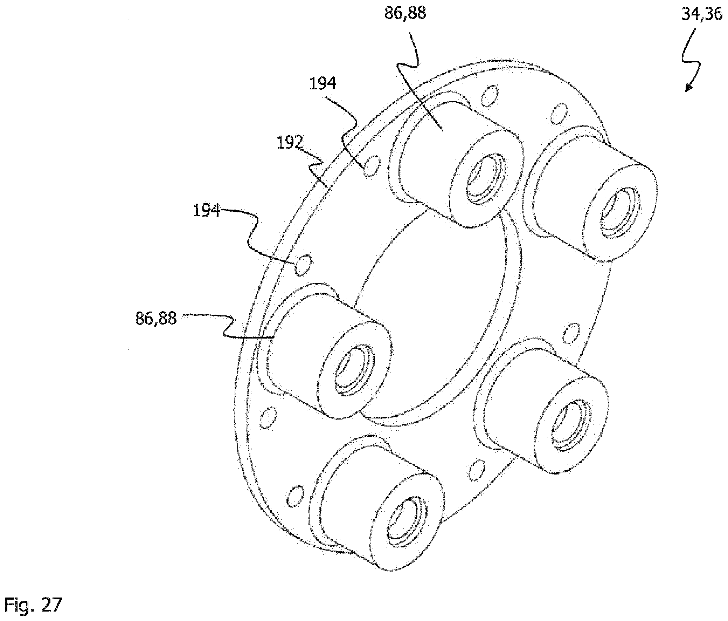

Fig. 27 zeigt eine perspektivische Ansicht der Teile 34, 36 der Verbindungsanordnung 18. Die Teile 34, 36 weisen einen scheibenförmigen Körper 192 auf. Ausgehend von diesem scheibenförmigen Grundkörper 192 erstrecken sich die Vorsprünge 86, 88 in axialer Richtung von dem scheibenförmigen Grundkörper 192 weg. In Umfangsrichtung zwischen den Vorsprüngen 86 und 88 sind jeweils zwei Öffnungen 194 erkennbar, die zur Verbindung der einzelnen Teile der Verbindungsanordnung 18 und damit zur Aufnahme der Schrauben 82, 84 dienen.

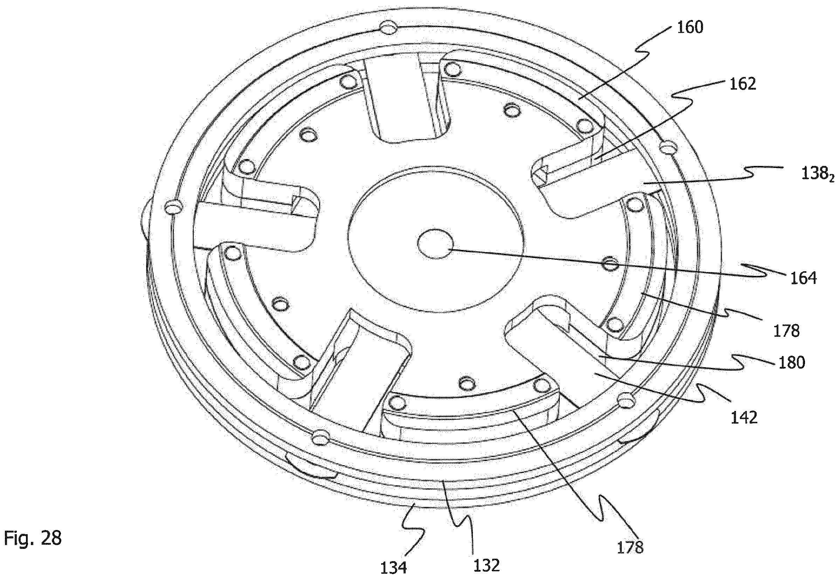

Fig. 28 zeigt eine perspektivische Ansicht der in axialer Richtung zentralen Baugruppe der Kupplungsvorrichtung 1410 (siehe Fig. 24). In Fig. 28 sind die Teile 160, 162 der Verbindungsanordnung 118 gezeigt. In den Ausnehmungen 180 der Teile 160, 162 zwischen den Befestigungsvorsprüngen 178 stehen die Arme 142 der Gelenkmembran 138₂ in Richtung der ringförmigen Elemente 134, 132 vor. Mit anderen Worten verbindet die Gelenkmembran 138₂ die Teile 160, 162 der Verbindungsanordnung 18 mit den ringförmigen Elementen 132, 134 der Zentriereinrichtung 118.

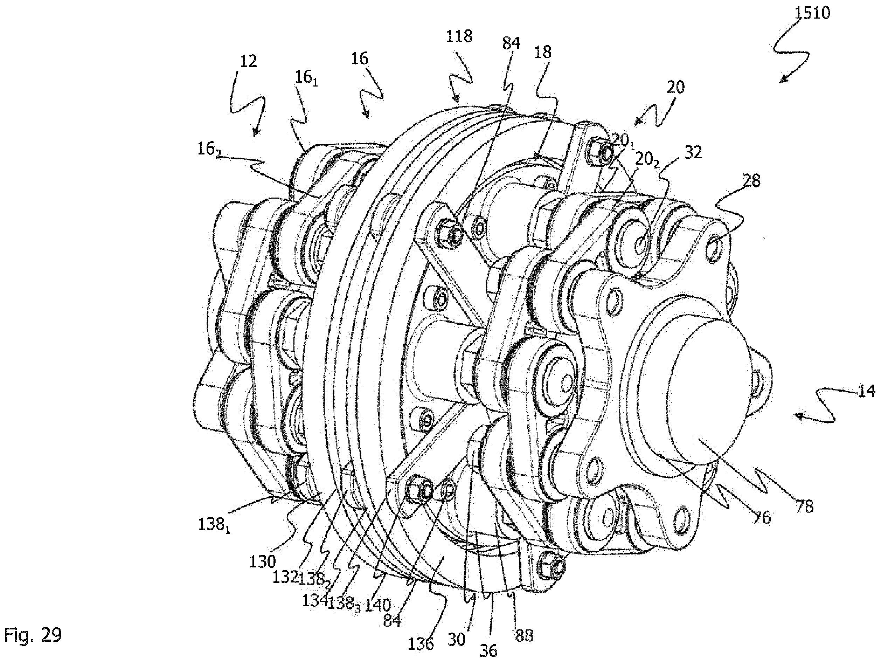

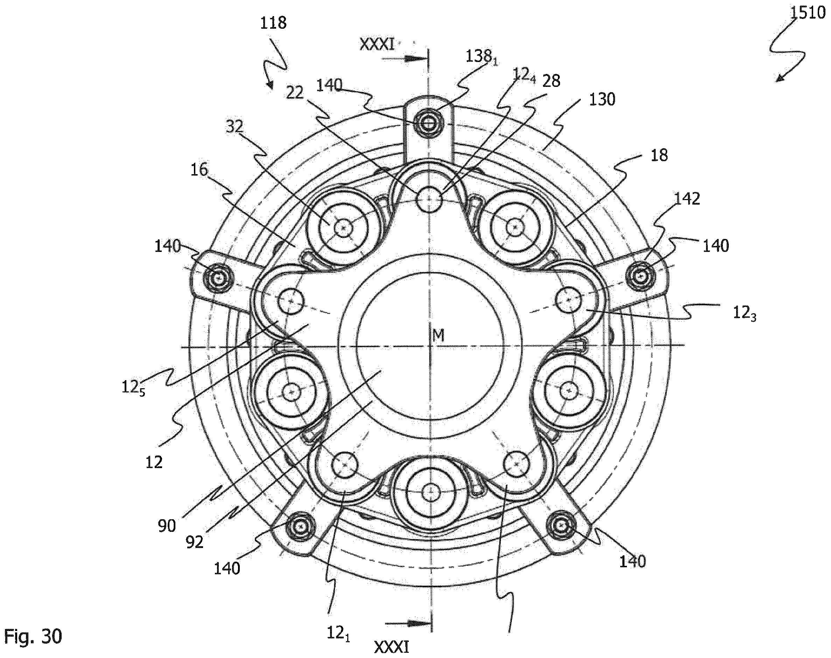

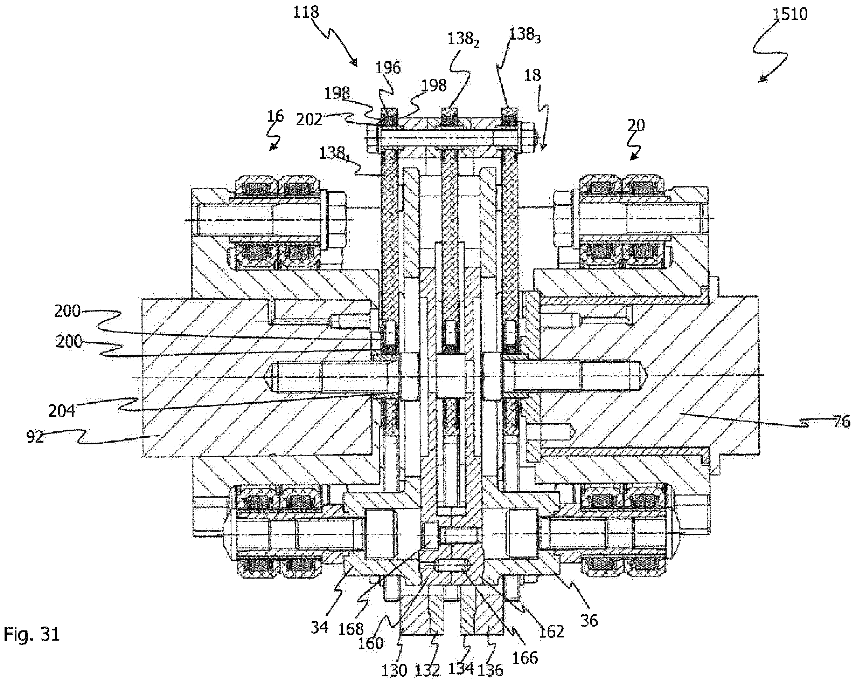

In den Figuren 29 bis 31 ist eine Kupplungsvorrichtung 1510 gemäß einer siebten Ausführungsform der Erfindung gezeigt.

Der einzige wesentliche Unterschied zwischen der mit Bezug auf die Figuren 22 bis 28 beschriebenen sechsten Ausführungsform und der in den Fig. 29 bis 31 gezeigten siebten Ausführungsform liegt darin, dass die Gelenkmembranen 138₁, 138₂ und 138₃ nicht wie bei der voranstehend beschriebenen Ausführungsform aus einem Blech oder ähnlichem sind, sondern aus einem Elastomer mit darin eingebetteten Fadenstrukturen bzw. Fadenpaketen. Die Fadenpakete 196 werden über Bundelemente 198 bzw. 200 an den jeweiligen Buchsen 202 und 204 in axialer Richtung gesichert und vor Krafteinwirkungen bei der Montage durch z.B. Schrauben geschützt.

Die Zentriereinrichtungen 118 der voranstehend beschriebenen Ausführungsformen stützen die Verbindungsanordnung 18 mittels der Gelenksmembranen 138₁, 138₂ und 138₃ ab. Dazu sind die Gelenkmembranen 138₁, 138₂ und 138₃ in radialer Richtung steif. Die kardanische Länge der Kupplungsvorrichtung wird von dem Abstand zwischen den fadenverstärkten Gelenkvorrichtungen 16 und 20 definiert. Die Gelenkmembranen 138₁, 138₂, 138₃ sind radial vorgespannt. Die Gelenkmembranen 138₁, 138₂, 138₃ sind mit den Ringelemente 130, 132, 134 und 136 gekoppelt. Dadurch werden bei der Montage der Kupplungsvorrichtung 1510 keine Vorspannkräfte benötigt.

Die Zentriereinrichtung 118 ist mit ihren Gelenkmembranen 138₁, 138₂ und 138₃ in axialer Richtung zwischen den fadenverstärkten Gelenkvorrichtungen 16 und 18 angeordnet. Mit anderen Worten ist die Zentriereinrichtung 118 in einem Raum angeordnet, der von dem einander zugewandten axialen Seiten der fadenverstärkten Gelenkvorrichtungen 16, 18 begrenzt wird. Die Zentriereinrichtung 18 ist außerhalb der axialen Erstreckung der fadenverstärkten Gelenkvorrichtung 16 und 18 angeordnet.

Die Zentriereinrichtung 118 mit ihrer Gelenkanordnung 24 gemäß den beiden voranstehenden Ausführungsformen hat folgende Funktionsweise:
Die beiden fadenverstärkten Gelenkvorrichtungen 16, 20 können im in eine Wellenanordnung eingebauten Zustand aufgrund eines in radialer Richtung vorliegenden Versatzes zwischen zwei zu verbindenden Wellen, der über die Kupplungsvorrichtung ausgeglichen werden soll, beispielsweise einen Beugewinkel von 1° aufweisen.

Da die Zentriereinrichtung 118 zwischen den beiden fadenverstärkten Gelenkvorrichtungen 16 und 20 angeordnet ist, weist die Zentriereinrichtung 118 eine geringere kardanische Länge auf. Die kardanische Länge der Zentriereinrichtung 118 wird von dem axialen Abstand zwischen der Gelenkmembran 138₁ und der Gelenkmembran 138₃ bestimmt. Die kardanische Länge der Kupplungsvorrichtung 1410 wird von dem axialen Abstand der fadenverstärkten Gelenkvorrichtungen 16 und 20 bestimmt. Im Detail bedeutet dies, dass der Abstand in axialer Richtung zwischen den beiden Gelenkmembranen 138₁ und 138₃ geringer als der Abstand der beiden fadenverstärkten Gelenkvorrichtungen 16 und 20 ist. Bei einem Beugewinkel von 1° der fadenverstärkten Gelenkvorrichtungen 16 und 20 weisen die Gelenkmembranen 138₁ und 138₃ aufgrund ihrer geringeren kardanischen Länge einen Beugewinkel von beispielsweise 3° auf.

Die Gelenkmembran 138₂ muss dementsprechend eine Winkeldifferenz von 2° ausgleichen bzw. kompensieren. Eine derartige Winkeldifferenz kann die Gelenkmembran 138₂ aufgrund ihrer Nachgiebigkeit in axialer Richtung und auch bei Beugebelastungen kompensieren. Dadurch kann eine radiale Abstützung der Verbindungsanordnung 18 ohne Gleitlager und Gleitbewegungen erreicht werden. Darüber hinaus müssen für die Bereitstellung einer radialen Abstützung die Anschlusstücke nicht verändert werden.

## Patentansprüche

1. Kupplungsvorrichtung (10) zum Verbinden eines Motors mit einem Getriebe eines Fahrzeugs, insbesondere eines Schienenfahrzeugs, mit
- wenigstens einem ersten Flansch (12),
- wenigstens einem zweiten Flansch (14),
- wenigstens einer ersten fadenverstärkten Gelenkvorrichtung (16),
- wenigstens einer zweiten fadenverstärkten Gelenkvorrichtung (20), und
- wenigstens einer Verbindungsanordnung (18), die zwischen der ersten und der zweiten fadenverstärkten Gelenkvorrichtung (16, 20) angeordnet ist, und
wobei die wenigstens eine erste fadenverstärkte Gelenkvorrichtung (16) und die wenigstens eine zweite fadenverstärkte Gelenkvorrichtung (20) in Richtung der Mittelachse (M) der Kupplungsvorrichtung (10) zwischen sich einen Verbindungsbereich (VB) definieren, **dadurch gekennzeichnet, dass** ausgehend von diesem Verbindungsbereich (VB) die erste fadenverstärkte Gelenkvorrichtung (16) mit der wenigstens einen Verbindungsanordnung (18) und dem ersten Flansch (12) sowie die zweite fadenverstärkte Gelenkvorrichtung (20) mit der wenigstens einen Verbindungsanordnung (18) und dem zweiten Flansch (14) verbindbar ist.

2. Kupplungsvorrichtung (10) nach Anspruch 1,
wobei der Verbindungsbereich (VB) in axialer Richtung von wenigstens einer von dem ersten Flansch (12) abgewandten axialen Fläche (16₂) der ersten fadenverstärkten Gelenkvorrichtung (16) und wenigstens einer von dem zweiten Flansch (14) abgewandten axialen Fläche (20₂) der zweiten fadenverstärkten Gelenkvorrichtung (20) begrenzt wird.

3. Kupplungsvorrichtung (10) nach einem der Ansprüche 1 oder 2,
wobei die den Verbindungsbereich (VB) begrenzenden axialen Flächen (16₂, 20₂) der ersten fadenverstärkten Gelenkvorrichtung (16) und der zweiten fadenverstärkten Gelenkvorrichtung (20) einander gegenüberliegen.

4. Kupplungsvorrichtung (10) nach einem der Ansprüche 1 bis 3,
wobei die wenigstens eine erste und die wenigstens eine zweite fadenverstärkte Gelenkvorrichtung (16, 20) wenigstens ein erstes Kopplungselement (50), das der wenigstens einen Verbindungsanordnung (18) zugeordnet ist, und wenigstens ein zweites Kopplungselement (56) aufweisen, das dem entsprechenden ersten oder zweiten Flansch (12, 14) zugeordnet ist.

5. Kupplungsvorrichtung (10) nach Anspruch 4,
wobei sich die wenigstens eine Verbindungsanordnung (18) an wenigstens einen Anlageabschnitt (64) des wenigstens einen ersten Kopplungselements (50) anlegt, und/oder wobei sich durch das wenigstens eine zweite Kopplungselement (52) Befestigungsmittel (22, 26) zur Verbindung mit dem ersten Flansch (12) oder dem zweiten Flansch (14) erstrecken.

6. Kupplungsvorrichtung (10) nach einem der Ansprüche 1 bis 5,
wobei die wenigstens eine Verbindungsanordnung (18) wenigstens ein erstes Teil (34) und wenigstens ein zweites Teil (36) aufweist.

7. Kupplungsvorrichtung (1010) nach einem der Ansprüche 1 bis 6,
wobei die wenigstens eine Verbindungsanordnung (18) wenigstens ein Zwischenteil (80) aufweist, das in axialer Richtung zwischen einem oder dem ersten Teil (34) und einem oder dem zweiten Teil (36) angeordnet ist.

8. Kupplungsvorrichtung (1010) nach Anspruch 7,
wobei das wenigstens eine Zwischenteil (80) lösbar mit dem ersten und dem zweiten Teil (34, 36) derart verbunden ist, dass es in radialer Richtung (ER) aus der Kupplungsvorrichtung (1010) entnehmbar ist.

9. Kupplungsvorrichtung (1410) nach einem der voranstehenden Ansprüche,
wobei wenigstens eine Zentriereinrichtung (118) zum radialen Abstützen der wenigstens einen Verbindungsanordnung (18) angeordnet ist, wobei die wenigstens eine Zentriereinrichtung (118) wenigstens eine Gelenkanordnung (138₁, 138₂, 138₁) aufweist, die in axialer Richtung zwischen der ersten fadenverstärkten Gelenkvorrichtung (16) und der zweiten fadenverstärkten Gelenkvorrichtung (20) angeordnet ist.

10. Kupplungsvorrichtung (1410) nach Anspruch 9,
wobei die wenigstens eine Gelenkanordnung (138₁, 138₂, 138₁) wenigstens eine erste Gelenkmembran (138₁) und wenigstens eine zweite Gelenkmembran (138₃) aufweist.

11. Antriebsanordnung für ein Schienenfahrzeug mit einem Motor und einem Getriebe, wobei eine Motorausgangswelle (92) und eine Getriebeeingangswelle (78) über wenigstens eine Kupplungsvorrichtung (10) nach einem der Ansprüche 1 bis 10 verbindbar sind.

12. Antriebsanordnung nach Anspruch 11,
wobei die Motorausgangswelle (92) und/oder die Getriebeeingangswelle (78) wenigstens ein Anschlussstück (76, 90) zur Verbindung mit der wenigstens einen Kupplungsvorrichtung (10) aufweisen.

13. Antriebsanordnung nach Anspruch 12,
wobei an dem wenigstens einen Anschlussstück (76, 90) wenigstens eine Zentrierhülse (120) aufgenommen ist, die mit wenigstens einem Zentrierbolzen (122) an der wenigstens einen Verbindungsanordnung (18) zusammenwirkt.

14. Fadenverstärkte Gelenkvorrichtung (16, 20) für eine Kupplungsvorrichtung eines Fahrzeugantriebs umfassend:
eine Mehrzahl von ersten Kopplungselementen (50),
eine Mehrzahl von zweiten Kopplungselementen (52),
wenigstens ein Fadenpaket, wobei das wenigstens eine Fadenpaket wenigstens ein erstes Kopplungselement (50) und wenigstens ein zweites Kopplungselement (52) kraftübertragend miteinander koppelt,
wenigstens eine Stützeinrichtung zur axialen Führung des wenigstens einen Fadenpakets an wenigstens einem ersten oder wenigstens einem zweiten Kopplungselement (50, 52),
wenigstens einen elastischen Körper (62), von dem das wenigstens eine Fadenpaket und die Kopplungselemente (50, 52) zumindest teilweise umgeben sind,
**dadurch gekennzeichnet, dass**
die ersten Kopplungselemente (50) wenigstens einen Abschnitt mit einem Innengewinde aufweisen, und die ersten Kopplungselemente (50) wechselweise mit den zweiten Kopplungselementen (52) angeordnet sind.

15. Fadenverstärkte Gelenkvorrichtung (16, 20) nach Anspruch 14,
wobei die ersten Kopplungselemente (50) einen Abschnitt (64) mit einem vorbestimmten Schraubenkopf aufweisen.

## Claims

1. A coupling device (10) for connecting a motor to a transmission of a vehicle, particularly of a railway vehicle, with
- at least one first flange (12),
- at least one second flange (14),
- at least one first thread-reinforced joint mechanism (16),
- at least one second thread-reinforced joint mechanism (20), and
- at least one connection assembly (18) that is arranged between the first and the second thread-reinforced joint mechanism (16, 20), and
wherein the at least one first thread-reinforced joint mechanism (16) and the at least one second thread-reinforced joint mechanism (20) define a connection area (VB) between them in the direction of the center axis (M) of the coupling device (10), **characterized in that**, starting from this connection area (VB), the first thread-reinforced joint mechanism (16) can be connected to the at least one connection assembly (18) and the first flange (12), and the second thread-reinforced joint mechanism (20) can be connected to the at least one connection assembly (18) and the second flange (14).

2. The coupling device (10) as set forth in claim 1,
wherein the connection area (VB) can be bordered in the axial direction by at least one axial surface (16₂) of the first thread-reinforced joint mechanism (16) facing away from the first flange (12), and by at least one axial surface (20₂) of the second thread-reinforced joint mechanism (20) facing away from the second flange (14).

3. The coupling device (10) as set forth in any one of claims 1 or 2,
wherein the axial surfaces (16₂, 20₂) of the first thread-reinforced joint mechanism (16) and of the second thread-reinforced joint mechanism defining the connection area (VB) are facing each other.

4. The coupling device (10) as set forth in any one of claims 1 to 3,
wherein the at least one first and the at least one second thread-reinforced joint mechanism (16, 20) have at least one first coupling element (50) that is associated with the at least one connection assembly (18), and have at least one second coupling element (56) that is associated with the corresponding first or second flange (12, 14).

5. The coupling device (10) as set forth in claim 4,
wherein the at least one connection assembly (18) rests against at least one bearing portion (64) of the at least one coupling element (50), and/or wherein fastening means (22, 26) for connecting to the first flange (12) or the second flange (14) extend through the at least one second coupling element (52).

6. The coupling device (10) as set forth in any one of claims 1 to 5,
wherein the at least one connection assembly (18) has at least one first part (34) and at least one second part (36).

7. The coupling device (1010) as set forth in any one of claims 1 to 6,
wherein the at least one connection assembly (18) has at least one intermediate member (80) that is arranged in the axial direction between a or the first part (34) and a or the second part (36).

8. The coupling device (1010) as set forth in claim 7,
wherein the at least one intermediate member (80) is detachably connected to the first and the second part (34, 36) such that it can be removed from the coupling device (1010) in the radial direction (ER).

9. The coupling device (1410) as set forth in any one of the preceding claims, wherein at least one centering device (118) is arranged for radially supporting the at least one connection assembly (18), with the at least one centering device (118) having at least one joint assembly (138₁, 138₂, 138₁) that is arranged in the axial direction between the first thread-reinforced joint mechanism (16) and the second thread-reinforced joint mechanism (20).

10. The coupling device (1410) as set forth in claim 9,
wherein the at least one joint assembly (138₁, 138₂, 138₁) has at least one first joint diaphragm (138₁) and at least one second joint diaphragm (138₃).

11. A drive arrangement for a railway vehicle with a motor and a transmission,
wherein a motor output shaft (92) and a transmission input shaft (78) can be connected by means of at least one coupling device (10) as set forth in any one of claims 1 to 10.

12. The drive arrangement as set forth in claim 11,
wherein the motor output shaft (92) and/or the transmission input shaft (78) have at least one connecting piece (76, 90) for connecting to the at least one coupling device (10).

13. The drive arrangement as set forth in claim 12,
wherein at least one centering sleeve (120) is received on the at least one connecting piece (76, 90), and cooperates with at least one centering bolt (122) on the at least one connection assembly (18).

14. A thread-reinforced joint mechanism (16, 20) for a coupling device of a vehicle drive, comprising:
a plurality of first coupling elements (50),
a plurality of second coupling elements (52),
at least one thread package, with the at least one thread package coupling at least one first coupling element (50) and at least one second coupling element (52) with one another in a force-transmitting manner,
at least one support means for axially guiding the at least one thread package on at least one first or at least one second coupling element (50, 52),
at least one elastic body (62) that encloses the at least one thread package and the coupling elements (50, 52) at least partially,
**characterized in that** the first coupling elements (50) have at least one portion with an internal thread, and the first coupling elements (50) are arranged alternately with the second coupling elements (52).

15. The thread-reinforced joint mechanism (16, 20) as set forth in claim 14,
wherein the first coupling elements (50) have a portion (64) with a specified screw head.

## Revendications

1. Dispositif d'accouplement (10) destiné à relier un moteur à une transmission d'un véhicule, en particulier d'un véhicule ferroviaire, le dispositif d'accouplement comprenant
- au moins une première bride (12),
- au moins une deuxième bride (14),
- au moins un premier dispositif d'articulation (16) renforcé par des fils,
- au moins un deuxième dispositif d'articulation (20) renforcé par des fils, et
- au moins un ensemble de liaison (18) qui est disposé entre les premier et deuxième dispositifs d'articulation (16, 20) renforcés par des fils, et
l'au moins un premier dispositif d'articulation (16) renforcé par des fils et l'au moins un deuxième dispositif d'articulation (20) renforcé par des fils définissant entre eux une région de liaison (VB) dans la direction de l'axe central (M) du dispositif d'accouplement (10), **caractérisé en ce que**, à partir de cette région de liaison (VB), le premier dispositif d'articulation (16) renforcé par des fils peut être relié à l'au moins un ensemble de liaison (18) et à la première bride (12) et le deuxième dispositif d'articulation (20) renforcé par des fils peut être relié à l'au moins un ensemble de liaison (18) et à la deuxième bride (14).

2. Dispositif d'accouplement (10) selon la revendication 1,
la région de liaison (VB) étant délimitée dans la direction axiale par au moins une surface axiale (16₂), opposée à la première bride (12), du premier dispositif d'articulation (16) renforcé par des fils et par au moins une surface axiale (20₂), opposée à la deuxième bride (14), du deuxième dispositif d'articulation (16) renforcé par des fils.

3. Dispositif d'accouplement (10) selon l'une des revendications 1 ou 2,
les surfaces axiales (16₂, 20₂), qui délimitent la région de liaison (VB), du premier dispositif d'articulation (16) renforcée par des fils et du deuxième dispositif d'articulation (20) renforcé par des fils étant opposées l'une à l'autre.

4. Dispositif d'accouplement (10) selon l'une des revendications 1 à 3,
les au moins un premier et au moins un deuxième dispositifs d'articulation (16, 20) renforcés par des fils comportant au moins un premier élément d'accouplement (50) qui est associé à l'au moins un ensemble de liaison (18), et au moins un deuxième élément d'accouplement (56) qui est associé à la première ou deuxième bride (12, 14) correspondante.

5. Dispositif d'accouplement (10) selon la revendication 4,
l'au moins un ensemble de liaison (18) venant en appui sur au moins une partie d'appui (64) de l'au moins un premier élément d'accouplement (50) et/ou des moyens de fixation (22, 26) destinés à être reliés à la première bride (12) ou la deuxième bride (14) s'étendent à travers l'au moins un deuxième élément d'accouplement (52).

6. Dispositif d'accouplement (10) selon l'une des revendications 1 à 5,
l'au moins un ensemble de liaison (18) comprenant au moins une première partie (34) et au moins une deuxième partie (36).

7. Dispositif d'accouplement (1010) selon l'une des revendications 1 à 6,
l'au moins un ensemble de liaison (18) comprenant au moins une partie intermédiaire (80) qui est disposée dans la direction axiale entre une ou la première partie (34) et une ou la deuxième partie (36).

8. Dispositif d'accouplement (1010) selon la revendication 7,
l'au moins une partie intermédiaire (80) étant reliée de manière amovible aux première et deuxième parties (34, 36) de manière à pouvoir être retirée du dispositif d'accouplement (1010) dans une direction radiale (ER).

9. Dispositif d'accouplement (1410) selon l'une des revendications précédentes,
au moins un moyen de centrage (118) étant disposé de façon à supporter radialement l'au moins un ensemble de liaison (18), l'au moins un moyen de centrage (118) comportant au moins un ensemble d'articulation (138₁, 138₂, 138₁) qui est disposé dans la direction axiale entre le premier dispositif d'articulation (16) renforcé par des fils et le deuxième dispositif d'articulation (20) renforcé par des fils.

10. Dispositif d'accouplement (1410) selon la revendication 9,
l'au moins un ensemble d'articulation (138₁, 138₂, 138₁) comprenant au moins une première membrane d'articulation (138₁) et au moins une deuxième membrane d'articulation (138₃).

11. Ensemble d'entraînement destiné à un véhicule ferroviaire et comprenant un moteur et une transmission, un arbre de sortie de moteur (92) et un arbre d'entrée de transmission (78) pouvant être reliés par le biais d'au moins un dispositif d'accouplement (10) selon l'une des revendications 1 à 10.

12. Dispositif d'entraînement selon la revendication 11,
l'arbre de sortie de moteur (92) et/ou l'arbre d'entrée de transmission (78) comprenant au moins un raccord (76, 90) destiné à être relié à l'au moins un dispositif d'accouplement (10).

13. Dispositif d'entraînement selon la revendication 12,
au moins un manchon de centrage (120), qui coopère avec au moins une broche de centrage (122) au niveau de l'au moins un ensemble de liaison (18), étant reçu au niveau de l'au moins un raccord (76, 90).

14. Dispositif d'articulation (16, 20) renforcé par des fils qui est destiné à un dispositif d'accouplement d'un entraînement de véhicule, le dispositif d'articulation comprenant :
une pluralité de premiers éléments d'accouplement (50),
une pluralité de deuxièmes éléments d'accouplement (52),
au moins un paquet de fils, l'au moins un paquet de fils accouplant au moins un premier élément d'accouplement (50) et au moins un deuxième élément d'accouplement (52) entre eux de manière à transmettre une force,
au moins un moyen de support destiné au guidage axial de l'au moins un paquet de fils au niveau d'au moins un premier ou au moins un deuxième élément d'accouplement (50, 52),
au moins un corps élastique (62) entourant au moins partiellement au moins un paquet de fils et les éléments d'accouplement (50, 52),
**caractérisé en ce que** les premiers éléments d'accouplement (50) comportent au moins une portion pourvue d'un filetage intérieur et les premiers éléments d'accouplement (50) sont disposés en alternance avec les deuxièmes éléments d'accouplement (52).

15. Dispositif d'articulation (16, 20) renforcé par des fils selon la revendication 14, les premiers éléments d'accouplement (50) comportant une portion (64) pourvue d'une tête de vis prédéterminée.
